(19) Europäisches Patentamt
European Patent Office
Office européen des brevets

(11) **EP 4 530 263 B1**

(12) **EUROPEAN PATENT SPECIFICATION**

(45) Date of publication and mention
of the grant of the patent:
**27.08.2025 Bulletin 2025/35**

(21) Application number: **23200790.6**

(22) Date of filing: **29.09.2023**

(51) International Patent Classification (IPC):
***C03B 5/185*** (2006.01)    ***C03B 5/03*** (2006.01)

(52) Cooperative Patent Classification (CPC):
**C03B 5/185; C03B 5/03**

(54) **A MELTING VESSEL FOR GLASS MELTING, AND A METHOD FOR MAKING A GLASS MELT**

SCHMELZGEFÄSS ZUM SCHMELZEN VON GLAS UND VERFAHREN ZUR HERSTELLUNG EINER GLASSCHMELZE

RÉCIPIENT DE FUSION POUR LA FUSION DU VERRE ET PROCÉDÉ DE FABRICATION D'UN VERRE FONDU

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**02.04.2025 Bulletin 2025/14**

(73) Proprietor: **SCHOTT AG**
**55122 Mainz (DE)**

(72) Inventors:
- **Schmidbauer, Wolfgang**
  **55122 Mainz (DE)**
- **Eichholz, Rainer Erwin**
  **95666 Mitterteich (DE)**
- **Rasp, Josef**
  **95666 Mitterteich (DE)**
- **Weidmann, Günter**
  **55122 Mainz (DE)**
- **Strobel, Alexander Uwe**
  **95666 Mitterteich (DE)**
- **Kick, Matthias**
  **95700 Neusorg (DE)**

(74) Representative: **Fuchs Patentanwälte**
**Partnerschaft mbB**
**Tower 185**
**Friedrich-Ebert-Anlage 35-37**
**60327 Frankfurt am Main (DE)**

(56) References cited:
CN-A- 107 522 387    CN-U- 203 187 516
JP-A- S57 205 328    US-A- 4 246 432

# EP 4 530 263 B1

**Description**

This disclosure relates to a melting vessel for glass melting, and a method for making a glass melt.

Background

The production of glass has a high carbon footprint due to the amount of energy required for the melting and fining processes. This is particularly the case for heating by gas burners which use natural gas. A reduction of the carbon footprint is possible if, instead, an electric resistance heating is used which is provided with power from renewable energy sources like wind power, waterpower, or solar panels. The same power sources may also be used to produce hydrogen by electrolysis which then can be used to feed the gas burners. While the latter requires less changes to an existing glass production facility with a gas burner heating, the intermediate step of electrolysis is associated with a considerable energy loss. Hence, a direct use of the electrical power is more desirable.

There are various kinds of glass compositions. Some glass compositions are relatively easy to manufacture in good quality, others require sophisticated equipment and/or extremely well-balanced production processes. Generally, the glass compositions used to make drinking glasses and bottles, ordinary windowpanes, and other construction glass products, e.g., glass wool used for insulation, are relatively easy to manufacture in good quality because the glass used for these products has rather low melting temperatures and a steep viscosity-temperature curve. Additionally, quality criteria of these manufactured products are not very stringent. For example, drinking glasses and construction glass products may contain an occasional bubble and/or solid inclusions, and variations in shape and dimension which are tolerable for the said purposes. These glass products may contain impurities to a certain extent because their use does not require defined light transmission properties, or stringent purity regulations.

The types of glass compositions used for many mass products, such as soda lime glass compositions, have low melting temperatures because of significant amounts of alkali metal oxides and alkaline earth metal oxides. The respective glass melting facilities achieve very high throughput, often more than 200 tons of glass per day, or even 400 tons per day. Naturally, the amount of energy needed for making 200 tons of low melting glass is significantly lower than for a higher melting glass.

The quality required for a given product depends on its intended use. Some high-quality glasses are used to make products that may not have the occasional bubble and must meet stringent criteria in terms of shape, dimensional variations, and purity (both chemical and optical). Many of these glasses are rather difficult to manufacture not only because of the stringent criteria but also because of high melting temperatures. High melting temperatures may be necessary to achieve melt viscosities sufficient for homogenization and removal of bubbles from the melt. Examples of high-quality glass products include pharmaceutical containers and glass tubes used for making such containers.

It is an object of this disclosure to provide glass products that meet high-quality criteria.

CN 107686226 A discloses a melting kiln for borosilicate glass comprising a cold-top melting furnace which is exclusively heated by electric means and a clarifier for, respectively heating and refining a glass melt. A liquid flow hole is provided at the bottom of the cold-top melting furnace, wherein an outlet end of the flow hole communicates with a lower end of a vertically arranged rising channel through which the molten glass passes. The upper end of the rising channel communicates with and feeds the molten glass into an inlet of the clarifier. The upper part of the cold-top melting furnace is provided with a feeding port for supplying borosilicate batch materials. The inner side of the cold-top melting furnace is provided with multiple kiln electrodes for heating by electric means. The interior of the clarifier is provided with a plurality of electrodes and a plurality of burners. Optionally, all burners may be arranged in the upper part of the clarifier. Optionally, a bubbling device may be disposed on the bottom brick of the clarifier to assist and improve refining the glass melt.

Yet, several drawbacks exist in the prior art with a view on providing efficient melting of the raw materials to obtain a homogeneous melt to be fed into a refining vessel and to thus provide high-quality glass products. Efficient melting is meant to embrace both energetic and hence process-economic melting of the raw materials as well as thorough physical intermixing of said raw materials when formed into a glass melt.

Therefore, it is an object of this disclosure to provide a method for making a glass melt which is efficient in terms of energy use, and which allows obtaining a glass product with well-defined high-quality criteria in subsequent process steps. It is an object of this disclosure to provide a melting vessel which can be used as part of said method. It is a further related object of this disclosure to provide a continuous production method for making a glass melt which has a low carbon footprint.

CN 107 522 387 A discloses a melting furnace for TFT (thin film transistor) glass. The melting furnace comprises a cold-top all-electric melting furnace body and a settling pond which are arranged in sequence; a liquid flow hole is arranged in the bottom of the cold-top all-electric melting furnace body, an outlet end of the liquid flow hole is communicated with an ascending channel, and the ascending channel is communicated with a feed inlet of the settling pond; a feed inlet for feeding TFT glass matching materials is arranged in the upper portion of the cold-top all-electric melting furnace body, and multiple furnace electrodes are arranged in the cold-top all-electric melting furnace body.

Summary of disclosure

In a first aspect, this disclosure relates to a melting vessel (101) for glass melting comprising

- two or more heating circuits (110),
- optionally an inlet (111) for a glass batch and/or an outlet (112) for a glass melt (120), and
- optionally a superstructure (109),

wherein the melting vessel (101) comprises a melting section (101a) and a conditioning section (101b), wherein the conditioning section (101b) is below the melting section (101a),
wherein the melting section (101a) has a first bottom wall (102a) and a first wall (103a) surrounding a first volume (104a), the first bottom wall (102a) having an opening (105),
wherein the conditioning section (101b) has a second bottom wall (102b) and a second wall (103b) surrounding a second volume (104b),
wherein the first volume (104a) is connected to the second volume (104b) via the opening (105),
wherein an area ratio between a bottom area and the opening (105) is between 1.2 and 3.0, or between 1.5 and 3.0, or between 1.75 and 2.75, or between 2.0 and 2.5, werein the bottom area is the sum of the areas of the first bottom wall (102a) and the opening (105), wherein the melting section (101a) has a first height (106a) of at least 0.8 m, or at least 1.1 m, or at least 1.4 m, wherein the conditioning section (101b) has a second height (106b) of at least 1.0 m, or at least 1.3 m, or at least 1.6 m, wherein a ratio of the first height (106a) to the second height (106b) is 1.0 or less, or 0.95 or less, or 0.90 or less.

Further embodiments of the invention are set forth in the dependent claims.
The melting vessel according to this disclosure comprises a melting section (101a) and a conditioning section (101b) which is designed to provide for continuous melting of a glass batch, i.e., a batch of raw materials which upon melting form a glass melt in the melting section. The melting vessel provides for obtaining a homogeneous glass melt in the conditioning section which may be processed further in additional parts downstream of the disclosed melting vessel. The melting vessel according to this disclosure is energy efficient with respect to melting the batch of raw materials to form a glass melt and to obtain a homogeneous glass melt.
According to the invention, this disclosure relates to a method for making a glass melt (120), comprising the steps of

- melting a batch of raw materials to form a glass melt (120) in a melting section (101a) of a melting vessel (101), the melting section (101a) having a first height (106a),
- heating the batch and/or the glass melt (120) using two or more heating circuits in the melting section (101a) of the melting vessel (101), wherein the melting section (101a) has a first bottom wall (102a) and a first wall (103a) surrounding a first volume (104a), the first bottom wall (102a) having an opening (105),
- processing the glass melt (120) in a conditioning section (101b) of the melting vessel (101), wherein the conditioning section (101b) is below the melting section (101a), the conditioning section (101b) having a second height (106b),
- wherein the conditioning section (101b) has a second bottom wall (102b) and a second wall (103b) surrounding a second volume (104b),
- withdrawing the glass melt (120) from the melting vessel (101),

wherein an average temperature of the glass melt (120) in the melting section (101a) is at least 10 K higher, or at least 30 K higher, or at least 50 K higher, than an average temperature of the glass melt (120) in the conditioning section (101b), wherein the melting section (101a) has a first height (106a) of at least 0.8 m, or at least 1.1 m, or at least 1.4 m, wherein the conditioning section (101b) has a second height (106b) of at least 1.0 m, or at least 1.3 m, or at least 1.6 m, wherein a ratio of the first height (106a) to the second height (106b) is 1.0 or less, or 0.95 or less, or 0.90 or less.
Further embodiments of the invention are set forth in the dependent claims.
The method for making a glass melt according to this disclosure is related to the melting vessel for glass melting and may be carried out using the melting vessel for glass melting according to this disclosure. Both the method for making a glass melt and the melting vessel according to this disclosure provide for obtaining a homogenous glass melt which is essentially free of "relicts", such as, e.g., crystals of portions of the raw material. The method and the melting vessel provide for convection currents in the melting section which create a distinct temperature layer and density layer of the molten part in said melting section which is different from the conditioning section.
Both the method and the melting vessel may be operated exclusively using two or more heating circuits, optionally in the melting section, which rely on renewable energy sources. Nonetheless, the initial step of melting a batch of raw materials into a glass melt in the melting section may be assisted by fuel burners relying on fossil fuels or may be alternatively assisted by oxyfuel burners relying on oxygen and hydrogen. In subsequent process steps, the method may be performed by continuous electric heating.

<u>Detailed description</u>

The detailed description relates to the aspects described in the summary of disclosure. Any of the following embodiments may relate to both the melting vessel and the method.

**Definitions**

A "glass melt" is a volume of a batch of glass raw materials that has a viscosity of less than $10^{76}$ dPas. Such a viscosity can be measured using the fiber elongation method, e.g., as described in DIN ISO 7884-6:1998-02, where the elongation speed of a fiber with a defined diameter is determined with different weights at different temperatures.

The temperature at which the glass melt has a viscosity of $10^2$ dPas is herein called "temperature T2". Similarly, the temperature at which the glass melt has a viscosity of $10^4$ dPas is herein called "temperature T4". Temperature T2 is less than 1,500 °C for glass compositions with high contents of alkali metal oxides or alkaline earth metal oxides, such as soda lime glass and other glass compositions. These viscosities can be measured using a rotational viscosimeter, e.g. as described in DIN ISO 7884-2:1998-2. The dependence of viscosity on temperature is determined according to the VFT equation (Vogel-Fulcher-Tammann). The VFT equation is shown below.

$$\lg(\eta/dPas) = A + \frac{B}{(t-t_0)}$$

In the VFT equation, t is the temperature under consideration. A, B and $t_0$ are the so-called VFT constants that are specific for each glass composition.

"Dwell time" is the time that a given portion of the glass melt spends in a part of the apparatus, e.g., the melting vessel before being withdrawn from the melting vessel, or the melting section (101a) of the melting vessel (101), or the conditioning section (101b) of the melting vessel (101). Dwell time can be measured using so-called tracers, i.e., components that are added to the glass melt so that they can be detected in the product, allowing conclusions as to the time spent in the melting vessel. Examples of tracer compounds are Ca, Sr and Y. The "average dwell time" is defined as:

$$\frac{melting\ vessel\ volume\ [m^3]}{melting\ vessel\ throughput\ [\frac{m^3}{h}]}$$

Whereas the average dwell time describes the time average which the glass melt takes to pass through a part of an apparatus, the "minimum dwell time" describes the shortest time that an individualized portion of the glass melt passes through a certain part of the apparatus. The "minimum dwell time" can also be measured using so-called tracers, for example by adding tracers to the batch of raw materials when fed into the melting vessel and by measuring the time it takes to detect said tracers upon leaving in the conditioning section (101b) of the melting vessel (101). Analogously, the "minimum dwell time" of the glass melt in the conditioning section (101b) of the melting vessel (101) can be measured as the time difference between detecting tracers in the glass melt when passing the opening (105) and detecting said tracers at the second bottom wall (102b) of the conditioning section (101b).

The melting vessel (101) comprises a melting section (101a) and a conditioning section (101b), wherein the conditioning section (101b) is below the melting section (101a). The melting section and the conditioning section shall be understood as geometrical bodies whose inner dimensions and geometrical properties are described in the following two paragraphs. For the purpose of describing volumes and heights of the conditioning section and the melting section, the terminology "wall", i.e., the first bottom wall (102a), the first wall (103a), the second bottom wall (102b) and the second wall (103b), shall be understood as a geometrical boundary.

The melting section (101a) shall be understood as a geometrical body with a first bottom wall (102a) and a first wall (103a) which surround a first volume (104a). The first bottom wall (102a) has an opening (105), wherein the edge of the opening (105) may lie in a flat plane. The first wall is an enveloping side wall which confines the melting section in the lateral dimensions. The melting section (101a) has thus a further opening at the top, wherein the edge of said opening may lie in a flat plane. The first volume (104a) shall thus be understood as the inner volume of the melting section (101a) surrounded and confined by the first bottom wall (102a), the first wall (103a) and two fictitious flat planes, wherein the opening (105) in the bottom wall is the first fictitious flat plane, and wherein the opening at the top is the second fictitious flat plane. The melting section (101a) has a first height (106a) which refers to the distance between the two fictitious flat planes which are oriented parallel to each other.

The conditioning section (101b) has a second bottom wall (102b) and a second wall (103b) surrounding a second volume (104b), wherein the first volume (104a) is connected to the second volume (104b) via the opening (105). The second wall is an enveloping side wall which confines the conditioning section in the lateral dimensions. The second volume shall thus be understood as the inner volume of the conditioning section surrounded and confined by the second bottom wall, the second wall and the first fictitious flat plane of the opening (105). The conditioning section has a second height (106b) which refers to the distance between the first fictitious flat plane and the deepest point located on the second bottom wall (102b). If an outlet (112) is present in the melting vessel (101), specifically in the conditioning section (101b), said outlet may be in the form of a curved or flat plane which is present in either the second bottom wall, or the second wall.

The first bottom wall (102a) may have a bottom wall mass center (108-1) and the opening (105) has an opening mass center (108-2). "Mass center" shall be understood in the context of geometrical figures, e.g., the mass center of a circle is the center of the circle, and the mass center of a square is the point of intersection of the two diagonals of the square.

The melting vessel (101) may comprise at least two melting temperature probes (119a-i, 119a-ii) located at opposite positions to each other on the first wall (103a) of the melting section (101a), and at least two conditioning temperature probes (119b-i, 119b-ii) located at opposite positions to each other on the second wall (103b) of the conditioning section (101b). The at least two melting temperature probes (119a-i, 119a-ii) and the at least two conditioning temperature probes (119b-i, 119b-ii) extend 5.0 cm into the melting vessel, and in case of the method they extend 5.0 cm into the glass melt. The at least two melting temperature probes (119a-i, 119a-ii) are arranged at a height which is equal to half of the first height (106a) with respect to the first bottom wall (102a). The at least two conditioning temperature probes (119b-i, 119b-ii) are arranged at a height which is equal to half of the second height (106b) with respect to the second bottom wall (102b). Under said constraints, opposite positions in each respective section shall be understood as a single position or a multitude of positions which provides for a maximum distance between the two temperature probes in each section. In the case of three or more temperature probes, opposite positions in each respective section shall be understood as a single position or a multitude of positions which provides for a maximum distance between the three or more temperature probes in each section, while the distance between any two neighboring probes shall be the same.

The melting vessel (101) may also comprise a bottom temperature probe (121) located on the second bottom wall (102b), and an outlet temperature probe (122) located on a wall of the outlet (112).

An "average temperature of the glass melt in the melting section (101a)" refers to the arithmetic mean of the temperature readings of temperature probes located on the first wall of the melting section (101a) which extend 5.0 cm into the glass melt, wherein said temperature probes are arranged at a height which is equal to half of the first height (106a) with respect to the first bottom wall (102a). Hence, at least two temperature readings will be used for calculating the arithmetic mean value. Optionally, three or more temperature probes may be used to increase the accuracy of the arithmetic mean value.

Likewise, an "average temperature of the glass melt in the conditioning section (101b)" refers to the arithmetic mean of the temperature readings of temperature probes located on the second wall of the conditioning section (101b) which extend 5.0 cm into the glass melt, wherein said temperature probes are arranged at a height which is equal to half of the second height (106b) with respect to the second bottom wall (102b). Hence, at least two temperature readings will be used for calculating the arithmetic mean value. Optionally, three or more temperature probes may be used to increase the accuracy of the arithmetic mean value.

Likewise, an "average temperature in a top layer of the glass melt (120) in the melting section (101a)" refers to the arithmetic mean of the temperature readings of temperature probes located on the first wall of the melting section (101a) which extend 5.0 cm into the glass melt, wherein said temperature probes are arranged at a height which is 5.0 cm below the surface of the glass melt.

A convectional flow may be established in the melting section (101a), optionally by regulating a heat flow of the batch and/or the glass melt (120) using the two or more heating circuits in the melting section (101a) of the melting vessel (101). In this disclosure, "convectional flow" refers to a fluid flow which is generated through thermal heating and expansion. A convectional flow thus carries heat from place to place by the bulk movement of a fluid.

An essentially uniform flow may be established in the conditioning section. In this disclosure, "uniform flow" covers the two specific cases of plug flow and laminar flow and refers to a situation where particle movement through each cross-section is positively correlated with respect to its direction and its velocity to all neighboring cross-sections.

In this disclosure, "plug flow" refers to a situation where the velocity of the fluid is constant across any cross-section of the section, e.g., the conditioning section. The plug flow thus assumes that there is no boundary layer adjacent to the second wall and the second bottom wall of the conditioning section.

In this disclosure, "laminar flow" means that fluid particles follow smooth paths in cross-sectional layers, wherein each layer moves smoothly past the adjacent layers with little or no mixing. In an ideal case, the fluid flows without lateral mixing and adjacent layers slide past one another. In an ideal case, there are no cross-currents perpendicular to the direction of flow, and no turbulences. In laminar flow, the motion of the particles of the fluid moves in straight lines parallel to adjacent solid surfaces.

In this disclosure, glass throughput refers to an amount of glass, for example given in tons or cubic meters, processed through a section volume or a sectional area per time, for example given in days. Accordingly, a ratio between the glass throughput and a bottom area may be expressed in tons per day per square meter, i.e., $t/(d \, m^2)$. Accordingly, a ratio between the glass throughput in $m^3/d$ and a volume may be expressed in 'per day' or 'day to the power of one', i.e., $d^{-1}$.

**Embodiments**

Melting vessel

In one general aspect this disclosure relates to a melting vessel (101) for glass melting comprising

- two or more heating circuits (110),

- optionally an inlet (111) for a glass batch and/or an outlet (112) for a glass melt (120), and

- optionally a superstructure (109),

wherein the melting vessel (101) comprises a melting section (101a) and a conditioning section (101b), wherein the conditioning section (101b) is below the melting section (101a), wherein the melting section (101a) has a first bottom wall (102a) and a first wall (103a) surrounding a first volume (104a), the first bottom wall (102a) having an opening (105), wherein the conditioning section (101b) has a second bottom wall (102b) and a second wall (103b) surrounding a second volume (104b), wherein the first volume (104a) is connected to the second volume (104b) via the opening (105), wherein the melting section (101a) has a first height (106a) of at least 0.8 m, or at least 1.1 m, or at least 1.4 m, wherein the conditioning section (101b) has a second height (106b) of at least 1.0 m, or at least 1.3 m, or at least 1.6 m, wherein a ratio of the first height (106a) to the second height (106b) is 1.0 or less, or 0.95 or less, or 0.90 or less.

According to the invention, the melting vessel has an area ratio between a bottom area and the opening (105) between 1.2 and 3.0. In further embodiments the area ratio is between 1.5 and 3.0, or between 1.75 and 2.75, or between 2.0 and 2.5, wherein the bottom area is the sum of the areas of the first bottom wall (102a) and the opening (105). In one embodiment the melting vessel has an area ratio between a bottom area and the opening (105) of 1.2 or more, or 1.5 or more, or 1.75 or more, or 2.0 or more. In one embodiment the melting vessel has an area ratio between a bottom area and the opening (105) of 3.0 or less, or 2.75 or less, or 2.5 or less. Without wishing to be bound to theory, said geometrical arrangement connecting the bottom area and the opening provides for a funneling effect of the glass melt upon transfer from the melting section (101a) into the conditioning section (101b) which aids and is beneficial for providing a homogenous glass melt in the conditioning section which is preferably free from "relicts" possibly originating the batch of raw materials. In the context of the method for making a glass melt (120) according to this disclosure, it has been further established that the separation of the circular flows generated in the melting section (101a) from the uniform flow generated in the conditioning section (101b) is assisted by the temperature difference of the glass melt between both sections, which manifests itself as an average temperature of the glass melt (120) in the melting section (101a) which is at least 10 K higher, or at least 30 K higher, or at least 50 K higher, than an average temperature of the glass melt (120) in the conditioning section (101b).

According to the invention, the melting section (101a) has a first height (106a) of at least 0.8 m, or at least 1.1 m, or at least 1.4 m, and the conditioning section (101b) has a second height (106b) of at least 1.0 m, or at least 1.3 m, or at least 1.6 m, and a ratio of the first height (106a) to the second height (106b) is 1.0 or less, or 0.95 or less, or 0.90 or less. In one embodiment of the melting vessel, the melting section (101a) has a first height (106a) of 0.8 to 2.0 m and the conditioning section (101b) has a second height (106b) of 1.0 to 2.5 m and a ratio of the first height (106a) to the second height (106b) of 0.7 to 1.0. In one embodiment of the melting vessel, the melting section (101a) has a first height (106a) of 0.8 to 2.0 m and the conditioning section (101b) has a second height (106b) of 1.0 to 2.5 m and a ratio of the first height (106a) to the second height (106b) of 0.7 to 0.9.

According to the invention, the melting section (101a) has a first height (106a) of at least 0.8 m, and the conditioning section (101b) has a second height (106b) of at least 1.0 m. According to the invention, the melting section (101a) has a first height (106a) of at least 1.1 m, and the conditioning section (101b) has a second height (106b) of at least 1.3 m.

According to the invention, the melting section (101a) has a first height (106a) of at least 1.1 m, and the conditioning section (101b) has a second height (106b) of at least 1.6 m. In one embodiment of the melting vessel, the melting section (101a) has a first height (106a) of 2.0 m or less, or 1.7 m or less. In one embodiment of the melting vessel, the melting section (101a) has a first height (106a) of 0.8 to 2.0 m, or 1.1 to 1.7 m.

In one embodiment of the melting vessel, the conditioning section (101b) has a second height (106b) of 2.5 m or less, or 2.2 m or less. In one embodiment of the melting vessel, the conditioning section (101b) has a second height (106b) of 1.0 to 2.5 m, or 1.6 to 2.2 m.

In one embodiment of the melting vessel, the conditioning section (101b) has a ratio of the first height (106a) to the second height (106b) of 0.7 or more, or 0.75 or more, or 0.80 or more. In one embodiment of the melting vessel, the conditioning section (101b) has a ratio of the first height (106a) to the second height (106b) of 0.7 to 1.0, or 0.75 to 0.95, or 0.80 to 0.90.

In one embodiment of the melting vessel, the first volume (104a) is at least 1.0 $m^3$, or at least 1.5 $m^3$, or at least 5.0 $m^3$, or at least 10.0 $m^3$, and/or the second volume (104b) is at least 0.8 $m^3$, or at least 1.1 $m^3$, or at least 3.0 $m^3$, or at least 5.0 $m^3$, wherein a ratio of the first volume (104a) to the second volume (104b) is 1.30 or more, or 1.50 or more, or 1.70 or more. In one embodiment of the melting vessel, the first volume (104a) is 1.0 to 40.0 $m^3$, and the second volume (104b) is 0.8 to 25.0 $m^3$, wherein a ratio of the first volume (104a) to the second volume (104b) is 1.30 to 2.50.

In one embodiment of the melting vessel, the first volume (104a) is 40.0 $m^3$ or less, or 35.0 $m^3$ or less, or 30.0 $m^3$ or less. In one embodiment of the melting vessel, the first volume (104a) is 1.0 to 40.0 $m^3$, or 1.5 to 35.0 $m^3$.

In one embodiment of the melting vessel, the second volume (104b) is 25.0 $m^3$ or less, or 20.0 $m^3$ or less. In one embodiment of the melting vessel, the second volume (104b) is 0.8 to 25.0 $m^3$, or 1.1 to 20.0$m^3$, or 3.0 to 20.0 $m^3$, or 5.0 to 20.0 $m^3$.

In one embodiment of the melting vessel, a ratio of the first volume (104a) to the second volume (104b) is 2.50 or less, or 2.30 or less, or 2.10 or less. In one embodiment of the melting vessel, a ratio of the first volume (104a) to the second volume (104b) is 1.30 to 2.50, or 1.50 to 2.30, or 1.70 to 2.10.

In one embodiment of the melting vessel, the first bottom wall (102a) is oriented horizontally, i.e. at 90°, or in an oblique angle $\alpha$ of 120° or less, or 110° or less, or 100° or less, with respect to the first wall (103a). In one embodiment of the melting vessel, the first bottom wall (102a) is oriented in an oblique angle $\alpha$ of 90° or more, or 92° or more, or 94° or more. In one embodiment of the melting vessel, the first bottom wall (102a) is oriented in an oblique angle $\alpha$ of 90° to 120°, or 92° to 110°, or 94° to 100°.

In one embodiment of the melting vessel, the first bottom wall (102a) has a minimal width of at least 0.10 m, or at least 0.15 m, or at least 0.20 m, or at least 0.25 m, or at least 0.30 m, wherein the minimal width of the first bottom wall is defined as the shortest distance between the opening (105) and the first wall (103a). In one embodiment of the melting vessel, the first bottom wall (102a) has a minimal width of 1.4 m or less, or 1.2 m or less, or 1.0 m or less, or 0.8 m or less, or 0.6 m or less. In one embodiment of the melting vessel, the first bottom wall (102a) has a minimal width of 0.10 to 1.4 m, or 0.15 to 1.2 m, or 0.20 to 1.0 m, or 0.25 to 0.8 m, or 0.30 to 0.6 m.

In one embodiment of the melting vessel, the first bottom wall (102a) has a bottom wall mass center (108-1) and wherein the opening (105) has an opening mass center (108-2), wherein the bottom wall mass center (108-1) and the opening mass center (108-2) are both on a fictitious vertical axis. Under this requirement both the first bottom wall (102a) and the opening (105) are centered with respect to each other which may assist and/or provide for a continuous flow of the glass melt from the melting section into the conditioning section.

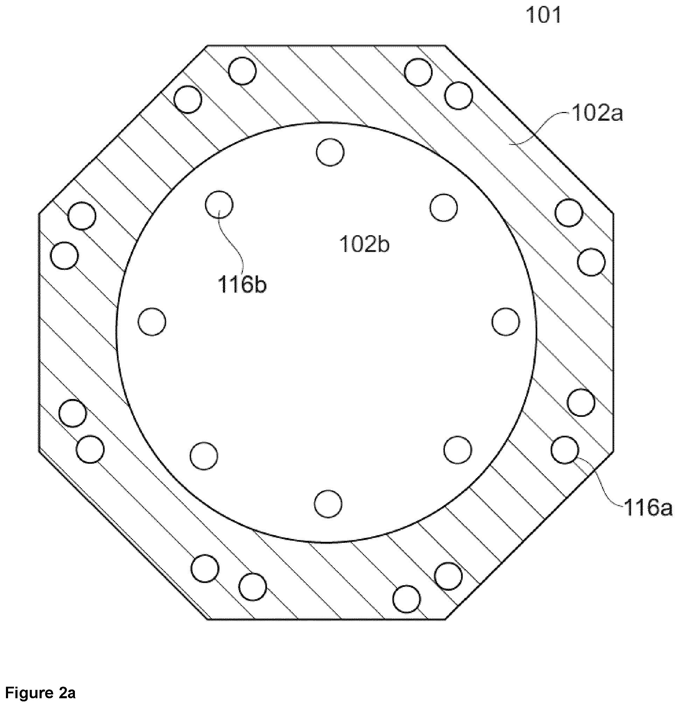

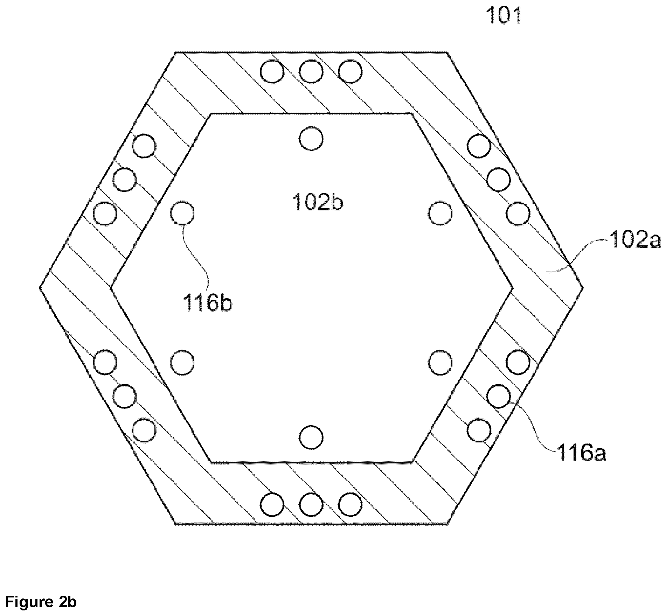

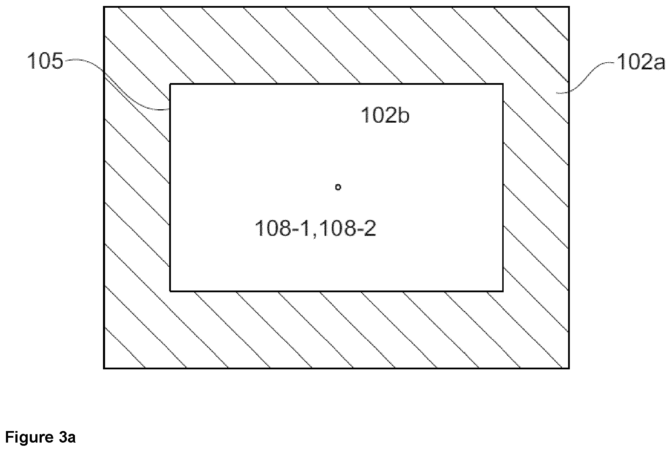

Advantageously, both the melting section (101a) and the conditioning section (101b) are rotationally symmetrical around one and the same fictitious vertical axis, and the first bottom wall (102a) and the opening (105) are rotationally symmetrical around one and the same fictitious vertical axis. A rotationally symmetrical design of the melting vessel may assist and/or provide for a continuous flow of the glass melt from the melting section into the conditioning section. In one embodiment, both the melting section (101a) and the conditioning section (101b) have an essentially rectangular shape when viewed in top view. Reference is made to Figure 3a; a rectangular shape implies a two-fold rotational axis. In one embodiment, both the melting section (101a) and the conditioning section (101b) have an essentially hexagonal shape when viewed in top view. Reference is made to Figure 2b; a hexagonal shape implies a six-fold rotational axis. In one embodiment, the melting section (101a) has an octagonal shape when viewed in top view and the conditioning section (101b) has a circular shape when viewed in top view. Reference is made to Figure 2a; an octagonal shape implies an eight-fold rotational axis.

The walls of the melting vessel, optionally also the inlet and/or the outlet, may be made of a variety of refractory materials. In an embodiment, the bottom walls and and/or the walls comprise or consist of refractory material. In one embodiment, the first bottom wall (102a), the second bottom wall (102b), the first wall (103a) and/or the second wall (103b) comprise or consist of refractory material. The refractory material may be a ceramic material. In embodiments, the refractory material does not comprise or consist of metals. In embodiments, the refractory material may be an oxidic ceramic, i.e., a material comprising or consisting of one or more oxides, such as metal oxides. Optionally, the refractory material may be temperature resistant up to at least 1,400 °C, at least 1,600 °C, or even at least 1,700 °C. "Temperature resistant" means in this disclosure that the refractory material has a melting point or melting range above the indicated temperature. In embodiments, the refractory material may be selected from $ZrO_2$, $Al_2O_3$, $SiO_2$, and combinations thereof. In one embodiment, the refractory material may be high-zirconia fused cast comprising 90 wt.% or more $ZrO_2$.

In one embodiment, the melting vessel further comprises a common controller (107) for controlling the two or more heating circuits (110), wherein the two or more heating circuits (110) each comprise a frequency changer (113) electrically connected via a power factor correction (114) and a transformer (115) to at least two electrodes (116) immersible into the glass melt (120).

In one embodiment, the melting vessel further comprises conductors (117) connecting the frequency changers (113), the power factor corrections (114), the transformers (115), and the electrodes (116), signal lines (118) connecting the frequency changers (113) with the common controller (107).

In one embodiment of the melting vessel, the one or more of the at least two electrodes (116) are located partially or completely in or on the first wall (103a) and/or the one or more of the at least two electrodes (116) constitute a part of the first wall (103a). In an alternative embodiment, the melting section (101a) comprises at least two electrodes (116) which are located partially in or on the first bottom wall (102a) and which have an oblique orientation (i.e. orientation of their longitudinal axes) within a range of 2 to 8°, preferably 4 to 6°, with respect to an essentially vertical position and a vertical rotational axis of the electrodes (116), and the conditioning section (101b) comprises at least two electrodes (116) which are located partially in or on the second bottom wall (102b) and which have an essentially vertical position with respect to a vertical rotational axis of the electrodes (116).

Advantageously, the melting vessel provides for melting a batch of raw materials to form a glass melt (120) in the melting section of the melting vessel via the at least two electrodes which may be flexibly located with respect to the first wall (103a). The location of the at least two electrodes partially or completely in or on the first wall provides for a more indirect heating and melting of the batch of raw materials because the first wall is heated first, and heat can spread within the first wall, before the heat is transferred to the glass melt. Alternatively, if the at least two electrodes are located only partially and to a small extent in or on the first wall, a more direct heating and melting of the batch of raw materials can be achieved which may in turn create strong convectional heat currents of the generated glass melt in the melting section. Convectional heat currents may assist and/or provide for forming a homogenous glass melt in the melting section.

In one embodiment of the melting vessel, the electrode material of one or more or all of the at least two electrodes is selected from Pt, Rh, Ir, Pd, alloys of these noble metals, Ta, Mo, $MoSi_2$, $MoZrO_2$, W, $SnO_2$, and combinations thereof. By using one of these materials, the operation of the apparatus can be optimized. Those electrodes provide an optimal combination of low corrosion and suitability for the operation at the claimed current frequencies.

In one embodiment of the melting vessel, one or more of the at least two electrodes (116) are rod-shaped or plate-shaped. While in some cases the electrodes may also be plate-shaped and then in particular be designed as a part of the walls or bottom of the melting vessel, in most cases rod-shaped electrodes are chosen. The rod-shaped electrodes are more versatile in arranging and easier to replace. Moreover, since the rod-shaped electrodes are spot-like sources of current, the zones of input of energy into the melt are easier to design to the desired layout.

In one embodiment, the melting vessel comprises at least six electrodes (116), optionally forming at least three heating circuits (110), wherein optionally at least two electrodes (116) form part of two independent heating circuits (110). The independent adjustment of the heating circuits allows the creation of optimized complex flow profiles of the melt, which may be achieved by using frequency changers before transformers in the single heating circuits which are jointly controlled by a common controller. The common controller allows coordination of the frequency changers. Thereby specific heating profiles for the single heating circuits can be generated independently from each other for the purpose of shaping the flow of the glass melt within the melting section of the melting vessel. The optimized flow may assist in minimizing or avoiding so-called dead zones and hence lead to a more homogeneously mixed glass melt which in turn improves the glass quality.

In one embodiment, the electrodes arranged in the melting section (101a) are essentially coextensive in height with respect to each other. In one embodiment, the electrodes arranged in the conditioning section (101b) are essentially coextensive in height with respect to each other.

In one embodiment, the electrodes arranged in the melting section (101a) are arranged rotationally symmetrical around one and the same fictitious vertical axis. A rotationally symmetrical design of the electrodes in the melting vessel, specifically in the melting section (101a), may assist and/or provide for a continuous flow of the glass melt from the melting section into the conditioning section. For example, if present, at least six electrodes may be arranged at the corners of a perfect hexagon, wherein each of the six electrodes has the same distance to its "left neighbor", its "right neighbor" and to the fictitious vertical axis.

In one general embodiment, pairs of two individual electrodes may form one heating circuit (110). In a more specific embodiment, pairs of double electrodes (116a) may form one heating circuit (110) (cf. Figure 2a). In a further specific embodiment, pairs of triple electrodes may form one heating circuit (110) (cf. Figure 2b).

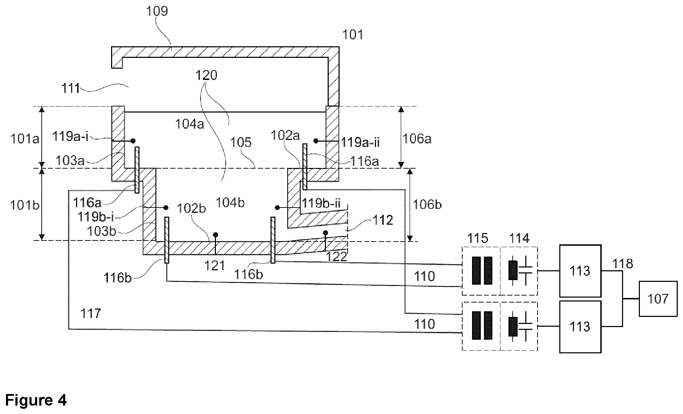

In one embodiment of the melting vessel, the melting section (101a) comprises six triples of electrodes (116) which form four heating circuits (110), and the conditioning section (101b) comprises six electrodes (116) which form four heating circuits (110). In this embodiment, the six triples of electrodes (116) in the melting section (101a) are arranged rotationally symmetrical around a six-fold vertical axis, wherein two oppositely located triples of electrodes (116) form one heating circuit (110). Additionally, two adjacent triples of electrodes (116) in the melting section (101a) form a further, i.e., fourth heating circuit (110). In this embodiment, the six electrodes (116) in the conditioning section (101b) are arranged rotationally symmetrical around a six-fold vertical axis, wherein two oppositely located electrodes (116) form one heating circuit (110). Additionally, two adjacent electrodes (116) in the conditioning section (101b) form a further, i.e., fourth heating circuit (110). This arrangement may be understood from Figure 2b, in further view of Figure 4. In this embodiment, the fourth heating circuit (110) of the two adjacent triples of electrodes (116) in the melting section (101a) is arranged vertically above an outlet (112) and the fourth heating circuit (110) of the two adjacent electrodes (116) in the conditioning section (101b) is arranged symmetrically and near an outlet (112). Advantageously, the fourth heating circuit (110) in the melting section (101a) and the fourth heating circuit (110) in the conditioning section (101b) allow creating an asymmetric heating profile with higher glass melt temperatures running towards the outlet.

In one embodiment, the melting vessel comprises at least two melting temperature probes (119a-i, 119a-ii) located at opposite positions to each other on the first wall (103a) of the melting section (101a), and at least two conditioning temperature probes (119b-i, 119b-ii) located at opposite positions to each other on the second wall (103b) of the conditioning section (101b), optionally comprising a bottom temperature probe (121) located on the second bottom wall (102b), optionally comprising an outlet temperature probe (122) located on a wall of the outlet (112), wherein the at least two temperature probes (119a-i, 119a-ii) and the at least two conditioning temperature probes (119b-i, 119b-ii) extend 5.0 cm into the melting vessel, wherein the at least two temperature probes (119a-i, 119a-ii) are arranged at a height which is equal to half of the first height (106a) with respect to the first bottom wall (102a), and wherein the at least two conditioning temperature probes (119b-i, 119b-ii) are arranged at a height which is equal to half of the second height (106b) with respect to the second bottom wall (102b).

In one embodiment of the melting vessel, the first bottom wall (102a) has an outer circumferential shape of a circle, an oval, or a polygon having 3 to 60 corners, and/or wherein the opening (105) has a cross-sectional shape of a circle, an oval, or a polygon having 3 to 60 corners. Advantageously, the first bottom wall and the opening have the same shape which provides for a more uniform transfer of the glass melt from the melting section into the conditioning section. It is of further advantage that both the first bottom wall and the opening have a same rotational symmetrical shape which further benefits the uniform transfer of the glass melt from the melting section into the conditioning section.

Method for making a glass melt

In one aspect, this disclosure relates to a method for making a glass melt (120), comprising the steps of

- melting a batch of raw materials to form a glass melt (120) in a melting section (101a) of a melting vessel (101), the melting section (101a) having a first height (106a),
- heating the batch and/or the glass melt (120) using two or more heating circuits in the melting section (101a) of the melting vessel (101), wherein the melting section (101a) has a first bottom wall (102a) and a first wall (103a) surrounding a first volume (104a), the first bottom wall (102a) having an opening (105),
- processing the glass melt (120) in a conditioning section (101b) of the melting vessel (101), wherein the conditioning section (101b) is below the melting section (101a), the conditioning section (101b) having a second height (106b), wherein the conditioning section (101b) has a second bottom wall (102b) and a second wall (103b) surrounding a second volume (104b),
- withdrawing the glass melt (120) from the melting vessel (101),

wherein an average temperature of the glass melt (120) in the melting section (101a) is at least 10 K higher, or at least 30 K higher, or at least 50 K higher, than an average temperature of the glass melt (120) in the conditioning section (101b), wherein the melting section (101a) has a first height (106a) of at least 0.8 m, or at least 1.1 m, or at least 1.4 m, wherein the conditioning section (101b) has a second height (106b) of at least 1.0 m, or at least 1.3 m, or at least 1.6 m, wherein a ratio of the first height (106a) to the second height (106b) is 1.0 or less, or 0.95 or less, or 0.90 or less.

In one embodiment, the average temperature of the glass melt (120) in the melting section (101a) is measured using at least two melting temperature probes (119a-i, 119a-ii) located at opposite positions to each other on a first wall (103a) of the melting section (101a), and the average temperature of the glass melt (120) in the conditioning section (101b) is measured using at least two conditioning temperature probes (119b-i, 119b-ii) located at opposite positions to each other on a second wall (103b) of the conditioning section (101b),

wherein the at least two melting temperature probes (119a-i, 119a-ii) and the at least two conditioning temperature probes (119b-i, 119b-ii) extend 5.0 cm into the glass melt,

wherein the at least two melting temperature probes (119a-i, 119a-ii) are arranged at a height which is equal to half of the first height (106a) with respect to the first bottom wall (102a), and wherein the at least two conditioning temperature probes (119b-i, 119b-ii) are arranged at a height which is equal to half of the second height (106b) with respect to the second bottom wall (102b).

The method may advantageously be carried out in the melting vessel according to this disclosure having a melting section (101a) and a conditioning section (101b). In line with the definition of a glass melt the batch of raw materials needs to be molten and heated to a temperature to achieve a viscosity of less than $10^{7.6}$ dPas which requirement applies to both the melting section (101a) and the conditioning section (101b). The two or more heating circuits in the melting section (101a) of the melting vessel (101) allow heating and melting the batch of raw materials and provide for forming an initial glass melt. The method is performed in a continuous manner. Whereas the batch of raw materials may be fed from a top part or a side part, the initial glass melt forms and gathers towards a lower or bottom part of the melting section (101a). In a subsequent step, the glass melt (120) is transferred to and processed in a conditioning section (101b) of the melting vessel (101), wherein the conditioning section (101b) is arranged below the melting section (101a).

An average temperature of the glass melt (120) in the melting section (101a) is at least 10 K higher, or at least 30 K higher, or at least 50 K higher, than an average temperature of the glass melt (120) in the conditioning section (101b). Said temperature difference allows forming a sufficiently uniform and homogeneous glass melt in the melting section (101a) out of the batch of raw materials. In a subsequent process in the conditioning section (101b) the initially generated glass melt is allowed to mature at a decreased temperature which leads to a more uniform and more homogeneous glass melt which may be already free of unwanted relicts. In a further process step, the glass melt (120) is withdrawn from the melting vessel (101) and may be further transferred and treated, for example in a fining vessel.

The process temperature is measured in both the melting section (101a) and the conditioning section (101b) using at least two temperature probes in each section (119a-i, 119a-ii, 119b-i, 119b-ii). Optionally, the two melting temperature probes (119a-i, 119a-ii) in the melting section (101a) may be attached to the first bottom wall (102a). Optionally, the two conditioning temperature probes (119b-i, 119b-ii) in the conditioning section (101b) may be attached to the second bottom wall (102b). The two temperature probes in each section are arranged at such a height level to allow measurement of the glass melt temperature in a middle layer of the melting section (101a) and the conditioning section (101b), respectively, when viewed from a side. Using said arrangement of the at least two temperature probes in each section gives access to an average temperature of the glass melt by virtue of convectional flows and heat distribution under the constraint of typical process times.

In one embodiment of the method, an average temperature in a top layer of the glass melt (120) in the melting section (101a) is at least 10 K lower, or at least 20 K lower, or at least 30 K lower than an average temperature of the glass melt (120) in the melting section (101a), wherein the top layer refers to a glass melt portion with a height of 10 cm of the first volume (104a). In one embodiment, the average temperature of the top layer of the glass melt (120) in the melting section (101a) is measured using at least two temperature probes located at opposite positions to each other on the first wall (103a) of the melting section (101a) and at a height which is in the middle of the top layer.

The top layer of the glass melt (120) is thus partially colder than the entire glass melt (120) in the melting section (101a) which for example results from feeding the batch of raw materials into the melting section (101a). Although the batch of raw materials is preheated, naturally it does not yet have the process temperatures required for melting. The fact that the average temperature in the top layer of the glass melt (120) is lower than the average temperature of the entire glass melt (120) in the melting section (101a), is referred to as "cold top".

In one embodiment of the method, a convectional flow is established in the melting section (101a), optionally by regulating a heat flow of the batch and/or the glass melt (120) using the two or more heating circuits in the melting section (101a) of the melting vessel (101). Convectional flows help establish intermixing of the components of the batch of raw materials and may thus provide a sufficiently uniform and a sufficiently homogeneous glass melt.

In one embodiment of the method, a uniform flow is established in the conditioning section (101b), optionally by regulating a heat flow of the glass melt (120) using the two or more heating circuits in the melting section (101a) of the melting vessel (101). The glass melt (120) passes through the opening (105) from the melting section (101a) into the conditioning section (101b) which means that the glass flows in both sections are coupled and/or correlated with each other. Optionally, heat flow of the glass melt in the melting section (101a) can be regulated such that a uniform flow is established in the conditioning section (101b). It is advantageous to generate a uniform downward flow, which may take the form of a plug-flow or laminar flow, or any complex shaped flow, proceeding from the opening (105) towards the second bottom wall (102b). In the melting section (101a) strong convectional currents are created by sufficient heating power of the heating circuits to form a glass melt. These convectional currents may be visualized as a donut shape which rise upwards in the vicinity of the first wall (103a), where the electrodes are located, move to the central part of the top layer of the glass melt or conglomerate and fall downwards in the vicinity of the vertical axis which forms the rotational axis of the melting section (101a). The glass melt zone which falls downward may to some extent reach into the conditioning section (101b). The actual position and strength of the glass melt zone which falls downward may be controlled by the power supply to the heating circuits arranged in the melting section (101a). Advantageously, the said glass melt zone which falls downward, and which may reach into the conditioning section (101b) shall be created distant from the outlet.

It is advantageous to create a stratified and slow flow in the conditioning section (101b) towards the outlet by running the heating circuits in the conditioning section (101b) in such a way that no strong convection currents are generated. The glass melt may then be transferred to a riser duct via a flow channel. The minimization and/or avoidance of convection currents in the conditioning section (101b) also provides for an advantageous minimum residence time of the glass melt therein, which thus ensures that the glass melt is free of relics and has few remaining bubbles before further transfer and processing of the glass melt in the fining vessel.

In one embodiment of the method, the uniform flow in the conditioning section (101b), which proceeds from the opening (105) towards the second bottom wall (102b), has a maximal velocity of 100 mm/min or less, 50 mm/min or less, or 30 mm/min or less. In one embodiment of the method, the maximal velocity of the uniform flow in the conditioning section (101b) is 1 mm/min or more, or 5 mm/min or more, or 10 mm/min or more. In one embodiment, the maximal velocity of the uniform flow in the conditioning section (101b) is 1 to 100 mm/min, or 5 to 50 mm/min, or 10 to 30 mm/min. In this disclosure, a uniform downward flow may take the form of a plug-flow or a laminar flow which means that the velocity profile of the flow through any cross-section parallel to the opening may be, respectively, flat (plug-flow) or parabolic (laminar flow). Alternatively, a complex shaped flow may have an irregular velocity profile. In any case, the maximal velocity thus refers to the global maximum of the flow velocity across the velocity profile. The maximal velocity may be determined with suitable tracer compounds added to the glass melt.

In one embodiment of the method, there is essentially no back-feeding from the glass melt (120) in the conditioning section (101b) into the glass melt in the melting section (101a). Advantageously, the method avoids turbulent flow. After the glass melt is generated in the melting section (101a) the glass flow adopts a uniform flow profile when entering the conditioning section (101b) and proceeds downwards. While passing the conditioning section the glass melt matures. Intermixing with parts of the glass melt from the melting section is thus avoided by virtue of the uniform flow profile.

The heat flow of the glass melt (120) in the melting section (101a) can be regulated in such a way that a convectional flow is generated towards the opening (105) which then proceeds in the form of a plug-flow or laminar flow from the opening (105) towards the second bottom wall (102b). Both plug-flow and laminar flow are directional and inherently avoid any back-feeding from the glass melt in the conditioning section into the melting section. In contrast, the creation of turbulent flows would generate such unwanted back-feeding of the glass melt.

In one embodiment of the method, a ratio between the glass throughput and a bottom area is at least 1.5 t/(d·m$^2$), or at least 1.7 t(d.m$^2$), or at least 2.0 t/(d·m$^2$), wherein the bottom area is the sum of the areas of the first bottom wall (102a) and the opening (105). In one embodiment, a ratio between the glass throughput and a bottom area is 6.0 t/(d·m$^2$) or less, or 5.0 t/(d·m$^2$) or less, or 4.0 t/(d·m$^2$) or less. In one embodiment, a ratio between the glass throughput and a bottom area is 1.5 to 6.0 t/(d·m$^2$), or 1.7 to 5.0 t/(d·m$^2$), or 2.0 to 4.0 t/(d·m$^2$).

In one embodiment of the method, a ratio between the glass throughput [m$^3$/d] and the second volume (104b) is at least 0.3 d$^{-1}$, or at least 0.5 d$^{-1}$. In one embodiment of the method, a ratio between the glass throughput [m$^3$/d] and the second volume (104b) is 2.0 d$^{-1}$ or less, or 1.2 d$^{-1}$ or less. In one embodiment of the method, a ratio between the glass throughput [m$^3$/d] and the second volume (104b) is 0.3 to 2.0 d$^{-1}$, or 0.5 to 1.2 d$^{-1}$.

Advantageously, the glass throughput is established and controlled in such a way that melting and heating of the batch of raw materials is provided to obtain a sufficiently uniform and sufficiently homogenous glass melt in the melting section which is then processed further in the conditioning section. By virtue of the geometric constraints of the melting section and the conditioning section with respect to each other, subsequent maturation steps of the glass melt in the conditioning section which provides for a lower average process temperature, compared to the average temperature in the melting section, can be steered. Depending on the glass type, it may be beneficial to adjust the ratio of the first volume (104a) to the second volume (104b).

In one embodiment of the method, an area ratio between the bottom area and the opening (105) is between 1.2 and 3.0, or between 1.5 and 3.0, or between 1.75 and 2.75, or between 2.0 and 2.5, wherein the bottom area is the sum of the areas of the first bottom wall (102a) and the opening (105). In one embodiment the area ratio between the bottom area and the opening (105) is 1.2 or more, or 1.5 or more, or 1.75 or more, or 2.0 or more. In one embodiment the area ratio between the bottom area and the opening (105) is 3.0 or less, or 2.75 or less, or 2.5 or less. Without wishing to be bound to theory, said geometrical arrangement connecting the bottom area and the opening provides for a funneling effect of the glass melt upon transfer from the melting section (101a) into the conditioning section (101b) which aids and is beneficial for providing a homogenous glass melt in the conditioning section which is preferably free from "relicts" possibly originating the batch of raw materials.

In one embodiment of the method, the glass melt (120) has a minimum dwell time of at least 2.0 hours, or at least 3.0 hours, or at least 4.0 hours in the melting section (101a). In one embodiment, the glass melt (120) has a minimum dwell time of 10.0 hours or less, or 9.0 hours or less, or 8.0 hours or less in the melting section (101a). In one embodiment of the method, the glass melt (120) has a minimum dwell time of 2.0 to 10.0 hours, or 3.0 to 9.0 hours, or 4.0 to 8.0 hours in the melting section (101a).

In one embodiment of the method, the glass melt (120) has a minimum dwell time of at least 2.0 hours, or at least 3.0 hours, or at least 4.0 hours in the conditioning section (101b). In one embodiment, the glass melt (120) has a minimum dwell time of 9.0 hours or less, or 8.0 hours or less, or 7.0 hours or less in the conditioning section (101b). In one embodiment, the glass melt (120) has a minimum dwell time of 2.0 to 9.0 hours, or 3.0 to 8.0 hours, or 4.0 to 7.0 hours in the conditioning section (101b).

In one embodiment of the method, the glass melt (120) has a minimum dwell time of at least 4.0 hours, or at least 5.0 hours, or at least 6.0 hours in the melting vessel (101). In one embodiment, the glass melt (120) has a minimum dwell time of 19.0 hours or less, or 17.0 hours or less, or 15.0 hours or less in the melting vessel (101). In one embodiment, the glass melt (120) has a minimum dwell time of 4.0 to 19.0 hours, or 5.0 to 17.0 hours, or 6.0 to 15.0 hours in the melting vessel (101).

In one embodiment of the method, the glass melt (120) has an average dwell time of at least 20.0 hours, or at least 24.0 hours, or at least 28.0 hours in the melting section (101a). In one embodiment, the glass melt (120) has an average dwell time of 50.0 hours or less, or 45.0 hours or less, or 40.0 hours or less in the melting section (101a). In one embodiment, the glass melt (120) has an average dwell time of 20.0 to 50.0 hours, or 24.0 to 45.0 hours, or 28.0 to 40.0 hours in the melting section (101a).

In one embodiment of the method, the glass melt (120) has an average dwell time of at least 10.0 hours, or at least 12.0 hours, or at least 14.0 hours in the conditioning section (101b). In one embodiment, the glass melt (120) has an average dwell time of 40.0 hours or less, or 35.0 hours or less, or 30.0 hours or less in the conditioning section (101b). In one embodiment, the glass melt (120) has an average dwell time of 10.0 to 40.0 hours, or 12.0 to 35.0 hours, or 14.0 to 30.0 hours in the conditioning section (101b).

In one embodiment of the method, the glass melt (120) has an average dwell time of at least 30.0 hours, or at least 35.0 hours, or at least 45.0 hours, or at least 55.0 hours in the melting vessel (101). In one embodiment, the glass melt (120) has an average dwell time of 90.0 hours or less, or 80.0 hours or less, or 70.0 hours or less in the melting vessel (101). In one embodiment, the glass melt (120) has an average dwell time of 30.0 to 90.0 hours, or 35.0 to 80.0 hours, or 45.0 to 70.0 hours in the melting vessel (101).

In one embodiment of the method, melting a batch of raw materials to form a glass melt (120) and/or heating the batch and/or the glass melt relies exclusively, i.e., to more than 99% (v/v) relative to the total volume of hydrogen and oxygen, on hydrogen and oxygen generated through the electrolysis of $H_2O$. Electrolysis powered through renewable energy inherently provides for a reduction of the environmental burden and a reduction of the carbon dioxide footprint associated with methods of making a glass melt. Alternatively, electrolysis can be powered through nuclear energy which provides for a $CO_2$-neutral production of hydrogen. However, because of the radioactive waste this energy source is not sustainable.

In one embodiment of the method, the carbon dioxide footprint of the obtained glass melt is less than 500 g $CO_2$ per kg of glass. In another embodiment, the carbon dioxide footprint of the obtained glass melt is less than 400 g, less than 300 g, less than 200 g, less than 100 g or even 0 g of $CO_2$ per kg of glass. For example, a glass melt having a carbon dioxide footprint of zero can be made using energy from renewable sources only, e.g., biofuel, hydrogen, or electricity from renewable sources. The carbon dioxide footprint refers to the $CO_2$ emissions resulting from scope 1 emissions according to the GHG protocol. In this context, this refers to the amount of $CO_2$ emission caused by burning fossil fuels and released by carbon containing raw materials during manufacturing of the glass melt per kg of glass material.

Glass composition

The viscosity behavior of the glass composition used in the method may be of relevance. As mentioned above, the temperature dependence of glass melt viscosity may be described using the VFT equation. Optionally, the glass melt has a VFT constant B in the range of from 5,000 K to 9,000 K and/or $t_0$ in the range of from 75 °C to 240 °C. Optionally, VFT constant A is from -5.0 to 0.0. In an embodiment, A is -1,0 or less, such as -4.0 to -1.0. In embodiments, VFT constant B is from 5,000 K to 9,000 K, such as from 4,500 K to 8,500 K. Optionally, $t_0$ may be at least 75 °C and up to 240 °C; $t_0$ may be at least 200 °C.

The glass composition may be borosilicate, alumino-borosilicate or aluminosilicate glass. The glass composition may contain alkali metal oxides in amounts of less than 20 % by weight, less than 15 % by weight, less than 12 % by weight, less than 10 % by weight or less than 5 % by weight. Optionally, the glass composition may be free of alkali metal oxides. In alternative embodiments, the amount of alkali metal oxides in the glass composition may be at least 1% by weight.

The glass composition may contain alkaline earth metal oxides in amounts of less than 20 % by weight, less than 15 % by weight, less than 12 % by weight, less than 10 % by weight, or less than 5 % by weight. Optionally, the glass composition may be free of alkaline earth metal oxides. In alternative embodiments, the amount of alkaline earth metal oxides in the glass composition may be at least 1 % by weight.

The glass composition may contain $SiO_2$ in an amount of at least 48 % by weight, at least 55 % by weight, at least 65 % by weight, at least 70 % by weight or at least 75 % by weight. Optionally, the amount of $SiO_2$ may range up to 85 % by weight, up to 82.5 % by weight or up to 80 % by weight.

Optionally, the glass composition may be that of a glass ceramic, i.e., a glass composition that can be further processed into a glass ceramic by appropriate heat treatment. In case that the glass composition is that of a glass ceramic, the composition may contain nucleating agents such as $TiO_2$ and/or $ZrO_2$. Optionally, the total amount of $TiO_2$ and/or $ZrO_2$ may be at least 2.0 % by weight, such as at least 2.5 % by weight. The glass composition may for example be a lithium aluminosilicate glass composition, e.g., containing at least 2.0 % by weight of $Li_2O$.

Description of the Figures

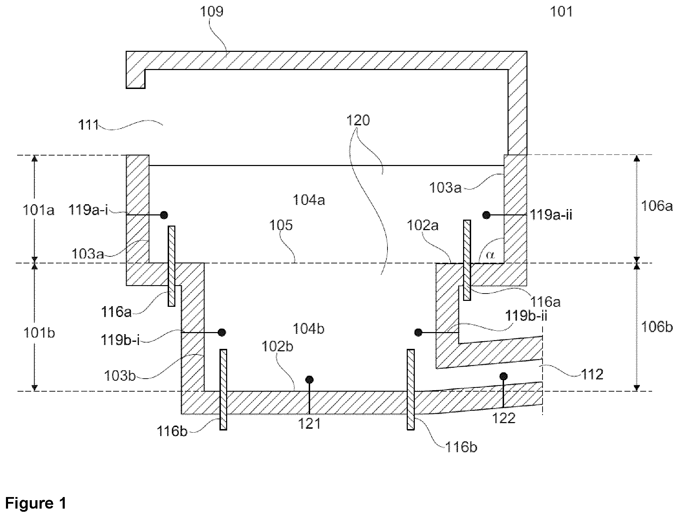

Figure 1 shows a side view of the melting vessel (101).

Figure 2a shows a top view of the melting vessel (101), wherein the melting section (101a) has a symmetrical octagonal shape and wherein the opening (105) has a circular rim.

Figure 2b shows a top view of the melting vessel (101), wherein the melting section (101a) and the conditioning section (101b) have a symmetrical hexagonal shape.

Figures 2a and 2b also show optional arrangements for the electrodes in the melting section (101a) and the conditioning section (101b).
The melting vessel (101) has two or more heating circuits (110), an inlet (111) for a glass batch and an outlet (112) for the glass melt (120), and a superstructure (109) which acts as a top cover. The melting vessel (101) is divided into a melting section (101a) and a conditioning section (101b) which is arranged below the melting section (101a). The melting section (101a) has a first bottom wall (102a) and a first wall (103a) which surround a first volume (104a). The first bottom wall (102a) has an opening (105). The conditioning section (101b) has a second bottom wall (102b) and a second wall (103b) surrounding a second volume (104b). The first volume (104a) is connected to the second volume (104b) via the opening (105). In the context of the melting vessel (101), the first volume (104a) and the second volume (104b) shall be understood as geometrical spaces which are adjacent to each other and have a common interface which is the area of the opening (105). In the context of the method, the second volume (104b) is filled with the glass melt (120), whereas the first volume (104a) is filled with the glass melt maximally until the glass level reaches a height distance of 5 cm with respect to the top of the first wall (103a) to avoid any overflow. Two electrodes (116, 116a) are located partially in the first bottom wall (102a) of the melting section (101a). Two electrodes (116, 116b) are located partially in the second bottom wall (102b) of the conditioning section (101b). Two melting temperature probes (119a-i, 119a-ii) are located at opposite positions to each other on the first wall (103a) of the melting section (101a). Two conditioning temperature probes (119b-i, 119b-ii) are located at opposite positions to each other on the second wall (103b) of the conditioning section (101b). A bottom temperature probe (121) is located on the second bottom wall (102b). An outlet temperature probe (122) is located on a wall of the outlet (112).

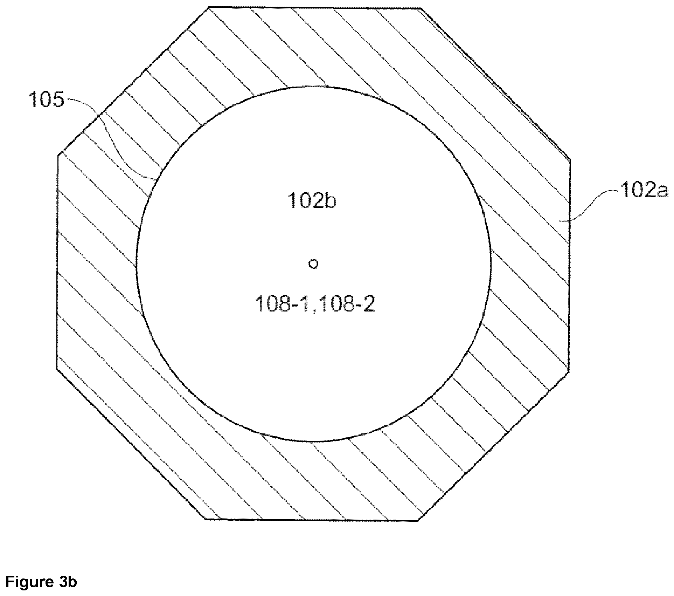

Figures 3a and 3b shows a first bottom wall (102a, hatched) with a bottom wall mass center (108-1) with an opening (105) having an opening mass center (108-2), wherein the bottom wall mass center (108-1) and the opening mass center (108-2) are both on a fictitious vertical axis.

Figure 3a shows a top view of the melting vessel (101), wherein the melting section (101a) and the conditioning section (101b) have a rectangular shape. Figure 3b shows a top view of the melting vessel (101), wherein the melting section (101a) has a symmetrical octagonal shape and wherein the opening (105) has a circular rim.

Figure 4 shows a common controller (107) for controlling two or more heating circuits (110). The common controller (107) can control an electrical current of each heating circuit (110) independently of the other heating circuit(s). The heating circuits (110) each comprise a frequency changer (113) which is electrically connected via a power factor correction (114) and a transformer (115) to at least two electrodes (116) immersible into the glass melt (120). Conductors (117) connect the frequency changers (113), the power factor corrections (114), the transformers (115), and the electrodes (116). Signal lines (118) connect the frequency changers (113) with the common controller (107).

Examples

Simulations were carried out to assess the melting efficiency of the melting vessel according to this disclosure. The efficiency of a melting vessel was assessed based on the minimum dwell time of the glass melt in the melting vessel. To this end, the relative minimum dwell time $t_{dwell\_min\_rel}$ of the glass melt was calculated as the ratio between the "minimum dwell time" $t_{dwell\_min}$ and the "average dwell time" $t_{dwell\_average}$:

$$t_{dwell\_\min\_rel} = \frac{t_{dwell\_\min}}{t_{dwell\_average}}.$$

The glass throughput in the melting vessel was kept constant at 42 t/d in all simulations. The following parameters were assessed with respect to the relative minimum dwell time.

**Table 1:** Influence of the depth of the conditioning section ($d_{cond\_sec}$).

| Arrangement | $d_{cond\_sec}$[m] | $\Delta T_{ms\text{-}cs}$ (K) | $t_{dwell\_\min}$ [h] | $t_{dwell\_\min\_rel}$ [%] |
|---|---|---|---|---|
| rectangular configuration of the melting vessel, | 1.3 | 20 | 4.7 | 10 |
| with plate shaped electrodes in both the melting section and the conditioning section the depth of the melting section is 1.3 m | 1.6 | 20 | 6 | 12 |

The average temperature difference between the glass melt in the melting section and the glass melt in the conditioning section was kept constant at 20 K. The relative minimum dwell time is increased for a melting vessel arrangement with a larger depth of the conditioning section with respect to the depth of the melting section. An increase of the relative minimum dwell time $t_{dwell\_\min\_rel}$ benefits the quality of the obtained glass melt.

**Table 2:** Influence of the average temperature difference between the glass melt in the melting section and the glass melt in the conditioning section.

| Arrangement | $\Delta T_{ms\text{-}cs}$(K) | $t_{dwell\_\min}$ [h] | $t_{dwell\_\min\_rel}$ [%] |
|---|---|---|---|
| rectangular configuration of the melting vessel, with plate shaped electrodes, | 42 | 6.6 | 13 |
| depth of the melting section: 1.3 m depth of the conditioning section: 1.6 m | 20 | 6 | 12 |

The relative minimum dwell time is increased for a melting vessel arrangement with a larger average temperature difference between the glass melt in the melting section and the glass melt in the conditioning section. An increase of the relative minimum dwell time $t_{dwell\_\min\_rel}$ benefits the quality of the obtained glass melt.

**Table 3:** Influence of the minimal width of the first bottom wall.

| Arrangement | Minimal width [mm] | $\Delta T_{ms\text{-}cs}$ (K) | $t_{dwell\_\min}$[h] | $t_{dwell\_\min\_rel}$[%] |
|---|---|---|---|---|
| rectangular configuration of the melting vessel, | 500 | 20 | 6 | 12 |
| | 800 | 20 | 5.3 | 11.1 |
| plate-shaped bottom electrodes in both the melting section and the conditioning section depth of the melting section: 1.3 m depth of the conditioning section: 1.6 m | 1000 | 20 | 4.8 | 10.7 |

A smaller minimal width of the first bottom wall leads to an increase of the relative minimum dwell time $t_{dwell\_\min\_rel}$ which benefits the quality of the obtained glass melt. However, the absence of a first bottom wall results in very short minimum dwell times of 2.1 h.

**Table 4:** Influence of the relationship between the first volume $V_{melt}$ of the melting section and the second volume $V_{cond}$ of the conditioning section.

| Arrangement | $V_{melt}$ [m$^3$] | $V_{cond}$ [m$^3$] | $V_{melt}$ / $V_{cond}$ | $\Delta T_{ms\text{-}cs}$ (K) | $t_{dwell\_\min}$ [h] | $t_{dwell\_\min\_rel}$ [%] |
|---|---|---|---|---|---|---|
| rectangular configuration of the melting vessel, | 25,2 | 15,2 | 1,66 | 20 | 6 | 12 |
| | 25,20 | 12,5 | 2,02 | 20 | 5.3 | 11.1 |

(continued)

| Arrangement | $V_{melt}$ [m³] | $V_{cond}$ [m³] | $V_{melt}$ / $V_{cond}$ | $\Delta T_{ms\text{-}cs}$ (K) | $t_{dwell\_min}$ [h] | $t_{dwell\_min\_rel}$ [%] |
|---|---|---|---|---|---|---|
| plate-shaped bottom electrodes in both the melting section and the conditioning section depth of the melting section: 1.3 m depth of the conditioning section: 1.6 m | 25,2 | 10,8 | 2,33 | 20 | 4.8 | 10.7 |

**Table 5:** Influence of the relationship between the area $A_{melt}$ of the melting section (also denoted 'bottom area' within this disclosure) and the area $A_{cond}$ of the conditioning section (also denoted 'the opening' within this disclosure).

| Arrangement | $A_{melt}$ [m²] | $A_{cond}$ [m²] | $A_{melt}$ / $A_{cond}$ | $\Delta T_{ms\text{-}cs}$ (K) | $t_{dwell\_min}$ [h] | $t_{dwell\_min\_rel}$ [%] |
|---|---|---|---|---|---|---|
| rectangular configuration of the melting vessel, | 19.4 | 9.5 | 2.04 | 20 | 6 | 12 |
| | 19.4 | 7.8 | 2.49 | 20 | 5.3 | 11.1 |
| plate-shaped bottom electrodes in both the melting section and the conditioning section depth of the melting section: 1.3 m depth of the conditioning section: 1.6 m | 19.4 | 6.7 | 2.90 | 20 | 4.8 | 10.7 |

Reference numerals

| 101 | melting vessel |
|---|---|
| 101a | melting section |
| 101b | conditioning section |
| 102a | first bottom wall |
| 102b | second bottom wall |
| 103a | first wall |
| 103b | second wall |
| 104a | first volume |
| 104b | second volume |
| 105 | opening |
| 106a | a first height |
| 106b | a second height |
| 107 | common controller |
| 108-1 | bottom wall mass center |
| 108-2 | opening mass center |
| 109 | superstructure |
| 110 | heating circuits |
| 111 | inlet |
| 112 | outlet |
| 113 | frequency changer |
| 114 | power factor correction |
| 115 | transformer |
| 116, 116a, 116b | electrodes |
| 117 | conductors |
| 118 | signal lines |

| 119a-i, 119a-ii | melting temperature probes |
| 119b-i, 119b-ii | conditioning temperature probes |
| 120 | glass melt |
| 121 | bottom temperature probe |
| 122 | outlet temperature probe |

**Claims**

1. A melting vessel (101) for glass melting comprising

   - two or more heating circuits (110),
   - optionally an inlet (111) for a glass batch and/or an outlet (112) for a glass melt (120), and
   - optionally a superstructure (109),
   wherein the melting vessel (101) comprises a melting section (101a) and a conditioning section (101b), wherein the conditioning section (101b) is below the melting section (101a),
   wherein the melting section (101a) has a first bottom wall (102a) and a first wall (103a) surrounding a first volume (104a), the first bottom wall (102a) having an opening (105),
   wherein the conditioning section (101b) has a second bottom wall (102b) and a second wall (103b) surrounding a second volume (104b),
   wherein the first volume (104a) is connected to the second volume (104b) via the opening (105),
   wherein an area ratio between a bottom area and the opening (105) is between 1.2 and 3.0, wherein the bottom area is the sum of the areas of the first bottom wall (102a) and the opening (105),
   wherein the melting section (101a) has a first height (106a) of at least 0.8 m, or at least 1.1 m, or at least 1.4 m,
   wherein the conditioning section (101b) has a second height (106b) of at least 1.0 m, or at least 1.3 m, or at least 1.6 m,
   wherein a ratio of the first height (106a) to the second height (106b) is 1.0 or less, or 0.95 or less, or 0.90 or less.

2. Melting vessel (101) according to claim 1,
   wherein an area ratio between the bottom area and the area of the opening (105) is between 1.5 and 3.0, or between 1.75 and 2.75, or between 2.0 and 2.5.

3. Melting vessel (101) according to claim 1 or claim 2,

   wherein the first volume (104a) is at least 1.0 $m^3$, or at least 1.5 $m^3$, or at least 5.0 $m^3$, or at least 10.0 $m^3$,
   wherein the second volume (104b) is at least 0.8 $m^3$, or at least 1.1 $m^3$, or at least 3.0 $m^3$, or at least 5.0 $m^3$, and/or
   wherein a ratio of the first volume (104a) to the second volume (104b) is 1.30 or more, or 1.50 or more, or 1.70 or more.

4. Melting vessel (101) according to any one of the preceding claims,
   wherein the first bottom wall (102a) is oriented horizontally or in an oblique angle $\alpha$ of 120° or less, or 110° or less, or 100° or less, with respect to the first wall (103a).

5. Melting vessel (101) according to claim 4, wherein the first bottom wall (102a) has a minimal width of at least 0.10 m, wherein the minimal width of the first bottom wall (102a) is defined as the shortest distance between the opening (105) and the first wall (103a).

6. Melting vessel (101) according to any one of the preceding claims, wherein the first bottom wall (102a) has a bottom wall mass center (108-1) and wherein the opening (105) has an opening mass center (108-2), wherein the bottom wall mass center (108-1) and the opening mass center (108-2) are both on a fictitious vertical axis.

7. Melting vessel (101) according to any one of the preceding claims, further comprising

   - a common controller (107) for controlling the two or more heating circuits (110),

   wherein the two or more heating circuits (110) each comprise a frequency changer (113) electrically connected via a power factor correction (114) and a transformer (115) to at least two electrodes (116) immersible into the glass melt (120).

8. Melting vessel (101) according to claim 7, further comprising

   - conductors (117) connecting the frequency changers (113), the power factor corrections (114), the transformers (115), and the electrodes (116),
   - signal lines (118) connecting the frequency changers (113) with the common controller (107).

9. Melting vessel (101) according to claim 7 or claim 8, wherein

   - the one or more of the at least two electrodes (116) are located partially or completely in or on the first bottom wall (102a) and/or the one or more of the at least two electrodes (116) constitute a part of the first bottom wall (102a); or
   - the melting section (101a) comprises at least two electrodes (116) which are located partially in or on the first bottom wall (102a) and which have an oblique orientation within a range of 2 to 8°, preferably 4 to 6°, with respect to an essentially vertical position and a vertical rotational axis of the electrodes (116), and the conditioning section (101b) comprises at least two electrodes (116) which are located partially in or on the second bottom wall (102b) and which have an essentially vertical position with respect to a vertical rotational axis of the electrodes (116); and/or
   - the electrode material of one or more or all of the at least two electrodes is selected from Pt, Rh, Ir, Pd, alloys of these noble metals, Ta, Mo, $MoSi_2$, $MoZrO_2$, W, $SnO_2$, and combinations thereof.

10. Melting vessel (101) according to any one of claims 7 to 9, wherein one or more of the at least two electrodes (116) are rod-shaped or plate-shaped.

11. Melting vessel (101) according to any one of claims 7 to 10, comprising at least six electrodes (116), optionally forming at least three heating circuits (110), wherein optionally at least two electrodes (116) form part of two independent heating circuits (110).

12. Melting vessel (101) according to claim 11, wherein the first bottom wall (102a), the second bottom wall (102b), the first wall (103a) and/or the second wall (103b) comprise or consist of refractory material, wherein the refractory material is optionally a ceramic material.

13. Melting vessel (101) according to any one of the preceding claims, wherein the first bottom wall (102a) has an outer circumferential shape of a circle, an oval, or a polygon having 3 to 60 corners, and/or wherein the opening (105) has a cross-sectional shape of a circle, an oval, or a polygon having 3 to 60 corners.

14. Method for making a glass melt (120), comprising the steps of

   - melting a batch of raw materials to form a glass melt (120) in a melting section (101a) of a melting vessel (101), the melting section (101a) having a first height (106a),
   - heating the batch and/or the glass melt (120) using two or more heating circuits in the melting section (101a) of the melting vessel (101), wherein the melting section (101a) has a first bottom wall (102a) and a first wall (103a) surrounding a first volume (104a), the first bottom wall (102a) having an opening (105),
   - processing the glass melt (120) in a conditioning section (101b) of the melting vessel (101), wherein the conditioning section (101b) is below the melting section (101a), the conditioning section (101b) having a second height (106b), wherein the conditioning section (101b) has a second bottom wall (102b) and a second wall (103b) surrounding a second volume (104b),
   - withdrawing the glass melt (120) from the melting vessel (101),
   wherein an average temperature of the glass melt (120) in the melting section (101a) is at least 10 K higher, or at least 30 K higher, or at least 50 K higher, than an average temperature of the glass melt (120) in the conditioning section (101b),
   wherein the melting section (101a) has a first height (106a) of at least 0.8 m, or at least 1.1 m, or at least 1.4 m, wherein the conditioning section (101b) has a second height (106b) of at least 1.0 m, or at least 1.3 m, or at least 1.6 m,
   wherein a ratio of the first height (106a) to the second height (106b) is 1.0 or less, or 0.95 or less, or 0.90 or less.

15. Method according to claim 14, wherein a convectional flow is established in the melting section (101a), optionally by regulating a heat flow of the batch and/or the glass melt (120) using the two or more heating circuits in the melting section (101a) of the melting vessel (101).

16. Method according to claim 14 or claim 15, wherein a uniform flow is established in the conditioning section (101b), optionally by regulating a heat flow of the glass melt (120) using the two or more heating circuits in the melting section (101a) of the melting vessel (101).

17. Method according to any one of claims 14 to 16, wherein there is essentially no back-feeding from the glass melt (120) in the conditioning section (101b) into the glass melt in the melting section (101a).

18. Method according to any one of claims 14 to 17, wherein the melting section (101a) has a first bottom wall (102a) and a first wall (103a) surrounding a first volume (104a), the first bottom wall (102a) having an opening (105), wherein the conditioning section (101b) has a second bottom wall (102b) and a second wall (103b) surrounding a second volume (104b),

wherein a ratio between the glass throughput and a bottom area is at least $1.5\,t/(d{\cdot}m^2)$, or at least $1.7\,t/(d{\cdot}m^2)$, or at least $2.0\,t/(d{\cdot}m^2)$, wherein the bottom area is the sum of the areas of the first bottom wall (102a) and the opening (105), and/or
wherein a ratio between the glass throughput $[m^3/d]$ and the second volume (104b) is at least $0.3\,d^{-1}$, or at least $0.5\,d^{-1}$.

19. Method according to any one of claims 14 to 18, wherein an area ratio between the bottom area and the opening (105) is between 1.2 and 3.0, or between 1.75 and 2.75, or between 2.0 and 2.5, wherein the bottom area is the sum of the areas of the first bottom wall (102a) and the opening.

20. Method according to any one of claims 14 to 19, wherein

- the glass melt (120) has a minimum dwell time of at least 2.0 hours, or at least 3.0 hours, or at least 4.0 hours in the melting section (101a), and/or
- the glass melt (120) has a minimum dwell time of at least 2.0 hours, or at least 3.0 hours, or at least 4.0 hours in the conditioning section (101b), and/or
- the glass melt (120) has a minimum dwell time of at least 4.0 hours, or at least 5.0 hours, or at least 6.0 hours in the melting vessel (101).

21. Method according to any one of claims 14 to 20, wherein

- the glass melt (120) has an average dwell time of at least 20.0 hours, or at least 24.0 hours, or at least 28.0 hours in the melting section (101a), and/or
- the glass melt (120) has an average dwell time of at least 10.0 hours, or at least 12.0 hours, or at least 14.0 hours in the conditioning section (101b), and/or
- the glass melt (120) has an average dwell time of at least 30.0 hours, or at least 35.0 hours, or at least 39.0 hours, or at least 43.0 hours in the melting vessel (101).

## Patentansprüche

1. Schmelzofen (101) zum Schmelzen von Glas, aufweisend:

zwei oder mehr Heizkreise (110);
optional eine Zuführung (111) für eine Glascharge und/oder einen Abführkanal (112) für eine Glasschmelze (120); und
optional einen Überbau (109),
wobei der Schmelzofen (101) einen Schmelzabschnitt (101a) und einen Konditionierungsabschnitt (101b) aufweist, wobei der Konditionierungsabschnitt (101b) unterhalb des Schmelzabschnitts (101a) angeordnet ist, wobei der Schmelzabschnitt (101a) eine erste Bodenwandung (102a) und eine erste Wandung (103a) aufweist, die ein erstes Volumen (104a) umschließen, wobei die erste Bodenwandung (102a) eine Öffnung (105) aufweist, wobei der Konditionierungsabschnitt (101b) eine zweite Bodenwandung (102b) und eine zweite Wandung (103b) aufweist, die ein zweites Volumen (104b) umschließen,
wobei das erste Volumen (104a) über die Öffnung (105) mit dem zweiten Volumen (104b) verbunden ist,
wobei ein Flächenverhältnis zwischen einer Bodenfläche und der Öffnung (105) zwischen 1,2 und 3,0 beträgt,
wobei die Bodenfläche die Summe der Flächen der ersten Bodenwandung (102a) und der Öffnung (105) ist,

wobei der Schmelzabschnitt (101a) eine erste Höhe (106a) von mindestens 0,8 m oder mindestens 1,1 m oder mindestens 1,4 m aufweist,

wobei der Konditionierungsabschnitt (101b) eine zweite Höhe (106b) von mindestens 1,0 m oder mindestens 1,3 m oder mindestens 1,6 m aufweist,

wobei ein Verhältnis der ersten Höhe (106a) zu der zweiten Höhe (106b) 1,0 oder weniger oder 0,95 oder weniger oder 0,90 oder weniger beträgt.

2. Schmelzofen (101) nach Anspruch 1,
wobei ein Flächenverhältnis zwischen der Bodenfläche und der Fläche der Öffnung (105) zwischen 1,5 und 3,0 oder zwischen 1,75 und 2,75 oder zwischen 2,0 und 2,5 beträgt.

3. Schmelzofen (101) nach Anspruch 1 oder Anspruch 2,

wobei das erste Volumen (104a) mindestens 1,0 m³ oder mindestens 1,5 m³ oder mindestens 5,0 m³ oder mindestens 10,0 m³ beträgt,

wobei das zweite Volumen (104b) mindestens 0,8 m³ oder mindestens 1,1 m³ oder mindestens 3,0 m³ oder mindestens 5,0 m³ beträgt, und/oder

wobei ein Verhältnis des ersten Volumens (104a) zu dem zweiten Volumen (104b) 1,30 oder mehr oder 1,50 oder mehr oder 1,70 oder mehr beträgt.

4. Schmelzofen (101) nach einem der vorhergehenden Ansprüche,
wobei die erste Bodenwandung (102a) horizontal oder in einem schrägen Winkel $\alpha$ von 120° oder weniger oder 110° oder weniger oder 100° oder weniger in Bezug auf die erste Wandung (103a) ausgerichtet ist.

5. Schmelzofen (101) nach Anspruch 4, wobei die erste Bodenwandung (102a) eine Mindestbreite von mindestens 0,10 m aufweist, wobei die Mindestbreite der ersten Bodenwandung (102a) als der kürzeste Abstand zwischen der Öffnung (105) und der ersten Wandung (103a) definiert ist.

6. Schmelzofen (101) nach einem der vorhergehenden Ansprüche, wobei die erste Bodenwandung (102a) einen Bodenwandungsmassenschwerpunkt (108-1) aufweist, und wobei die Öffnung (105) einen Öffnungsmassenschwerpunkt (108-2) aufweist, wobei der Bodenwandungsmassenschwerpunkt (108-1) und der Öffnungsmassenschwerpunkt (108-2) beide auf einer fiktiven vertikalen Achse liegen.

7. Schmelzofen (101) nach einem der vorhergehenden Ansprüche, ferner aufweisend:

eine gemeinsame Steuereinheit (107) zur Steuerung der zwei oder mehr Heizkreise (110), wobei die zwei oder mehr Heizkreise (110) jeweils einen Frequenzwandler (113) aufweisen, der über eine Leistungsfaktorkorrigiereinrichtung (114) und einen Transformator (115) mit mindestens zwei in die Glasschmelze (120) eintauchbaren Elektroden (116) elektrisch verbunden ist.

8. Schmelzofen (101) nach Anspruch 7, ferner aufweisend:

elektrische Leiter (117), die die Frequenzwandler (113), die Leistungsfaktorkorrigiereinrichtungen (114), die Transformatoren (115) und die Elektroden (116) verbinden,
Signalleitungen (118), die die Frequenzwandler (113) mit der gemeinsamen Steuereinheit (107) verbinden.

9. Schmelzofen (101) nach Anspruch 7 oder Anspruch 8, wobei

die eine oder mehreren der mindestens zwei Elektroden (116) teilweise oder vollständig in oder auf der ersten Bodenwandung (102a) angeordnet sind, und/oder die eine oder mehreren der zwei Elektroden (116) einen Teil der ersten Bodenwandung (102a) bilden, oder
der Schmelzabschnitt (101a) mindestens zwei Elektroden (116) aufweist, die teilweise in oder auf der ersten Bodenwandung (102a) angeordnet sind und die eine schräge Ausrichtung in einem Bereich von 2 bis 8°, vorzugsweise 4 bis 6°, in Bezug auf eine im Wesentlichen vertikale Position und eine vertikale Drehachse der Elektroden (116) aufweisen, und wobei der Konditionierungsabschnitt (101b) mindestens zwei Elektroden (116) aufweist, die teilweise in oder auf der zweiten Bodenwandung (102b) angeordnet sind und eine im Wesentlichen vertikale Position in Bezug auf eine vertikale Drehachse der Elektroden (116) aufweisen, und/oder
das Elektrodenmaterial einer oder mehrerer oder aller der mindestens zwei Elektroden ausgewählt ist aus Pt, Rh, Ir, Pd, Legierungen dieser Edelmetalle, Ta, MO, MoSi$_2$, MoZrO$_2$, W, SnO$_2$ und Kombinationen davon.

10. Schmelzofen (101) nach einem der Ansprüche 7 bis 9, wobei eine oder mehrere der mindestens zwei Elektroden (116) stabförmig oder plattenförmig sind.

11. Schmelzofen (101) nach einem der Ansprüche 7 bis 10, mit mindestens sechs Elektroden (116), die optional mindestens drei Heizkreise (110) bilden, wobei optional mindestens zwei Elektroden (116) einen Teil von zwei unabhängigen Heizkreisen (110) bilden.

12. Schmelzofen (101) nach Anspruch 11, wobei die erste Bodenwandung (102a), die zweite Bodenwandung (102b), die erste Wandung (103a) und/oder die zweite Wandung (103b) ein feuerfestes Material aufweisen oder daraus bestehen, wobei das feuerfeste Material optional ein keramisches Material ist.

13. Schmelzofen (101) nach einem der vorhergehenden Ansprüche, wobei die erste Bodenwandung (102a) eine Außenumfangsform eines Kreises, eines Ovals oder eines Polygons mit 3 bis 60 Ecken aufweist, und/oder wobei die Öffnung (105) eine Querschnittsform eines Kreises, eines Ovals oder eines Polygons mit 3 bis 60 Ecken aufweist.

14. Verfahren zum Herstellen einer Glasschmelze (120), mit den Schritten:

Schmelzen einer Charge von Rohstoffen zu einer Glasschmelze (120) in einem Schmelzabschnitt (101a) eines Schmelzofens (101), wobei der Schmelzabschnitt (101a) eine erste Höhe (106a) aufweist;
Erwärmen der Charge und/oder der Glasschmelze (120) unter Verwendung von zwei oder mehr Heizkreisen im Schmelzabschnitt (101a) des Schmelzofens (101), wobei der Schmelzabschnitt (101a) eine erste Bodenwandung (102a) und eine erste Wandung (103a) aufweist, die ein erstes Volumen (104a) umschließen, wobei die erste Bodenwandung (102a) eine Öffnung (105) aufweist;
Verarbeiten der Glasschmelze (120) in einem Konditionierungsabschnitt (101b) des Schmelzofens (101), wobei der Konditionierungsabschnitt (101b) unterhalb des Schmelzabschnitts (101a) angeordnet ist, wobei der Konditionierungsabschnitt (101b) eine zweite Höhe (106b) aufweist, wobei der Konditionierungsabschnitt (101b) eine zweite Bodenwandung (102b) und eine zweite Wandung (103b) aufweist, die ein zweites Volumen (104b) umschließen;
Ableiten der Glasschmelze (120) aus dem Schmelzofen (101),
wobei eine durchschnittliche Temperatur der Glasschmelze (120) im Schmelzabschnitt (101a) mindestens 10 K höher oder mindestens 30 K höher oder mindestens 50 K höher ist als eine durchschnittliche Temperatur der Glasschmelze (120) im Konditionierungsabschnitt (101b),
wobei der Schmelzabschnitt (101a) eine erste Höhe (106a) von mindestens 0,8 m oder mindestens 1,1 m oder mindestens 1,4 m aufweist,
wobei der Konditionierungsabschnitt (101b) eine zweite Höhe (106b) von mindestens 1,0 m oder mindestens 1,3 m oder mindestens 1,6 m aufweist,
wobei ein Verhältnis der ersten Höhe (106a) zu der zweiten Höhe (106b) 1,0 oder weniger oder 0,95 oder weniger oder 0,90 oder weniger beträgt.

15. Verfahren nach Anspruch 14, wobei im Schmelzabschnitt (101a) eine konvektive Strömung hergestellt wird, optional durch Regulieren eines Wärmeflusses der Charge und/oder der Glasschmelze (120) unter Verwendung der zwei oder mehr Heizkreise im Schmelzabschnitt (101a) des Schmelzofens (101).

16. Verfahren nach Anspruch 14 oder Anspruch 15, wobei im Konditionierungsabschnitt (101b) eine gleichmäßige Strömung hergestellt wird, optional durch Regeln eines Wärmeflusses der Glasschmelze (120) unter Verwendung der zwei oder mehr Heizkreise im Schmelzabschnitt (101a) des Schmelzofens (101).

17. Verfahren nach einem der Ansprüche 14 bis 16, wobei im Wesentlichen keine Rückführung aus der Glasschmelze (120) im Konditionierungsabschnitt (101b) in die Glasschmelze im Schmelzabschnitt (101a) stattfindet.

18. Verfahren nach einem der Ansprüche 14 bis 17, wobei der Schmelzabschnitt (101a) eine erste Bodenwandung (102a) und eine erste Wandung (103a) aufweist, die ein erstes Volumen (104a) umschließen, wobei die erste Bodenwandung (102a) eine Öffnung (105) aufweist, wobei der Konditionierungsabschnitt (101b) eine zweite Bodenwandung (102b) und eine zweite Wandung (103b) aufweist, die ein zweites Volumen (104b) umschließen,

wobei ein Verhältnis zwischen dem Glasdurchsatz und einer Bodenfläche mindestens 1,5 t/(d·m$^2$) oder mindes-

tens 1,7 t/(d·m$^2$) oder mindestens 2,0 t/(d·m$^2$) beträgt, wobei die Bodenfläche die Summe der Flächen der ersten Bodenwandung (102a) und der Öffnung (105) ist, und/oder
wobei ein Verhältnis zwischen dem Glasdurchsatz [m$^3$/d] und dem zweiten Volumen (104b) mindestens 0,3 d$^{-1}$ oder mindestens 0,5 d$^{-1}$ beträgt.

19. Verfahren nach einem der Ansprüche 14 bis 18, wobei ein Flächenverhältnis zwischen der Bodenfläche und der Öffnung (105) zwischen 1,2 und 3,0 oder zwischen 1,75 und 2,75 oder zwischen 2,0 und 2,5 beträgt, wobei die Bodenfläche die Summe der Flächen der ersten Bodenwandung (102a) und der Öffnung ist.

20. Verfahren nach einem der Ansprüche 14 bis 19, wobei

die Glasschmelze (120) eine Mindestverweilzeit von mindestens 2,0 Stunden oder mindestens 3,0 Stunden oder mindestens 4,0 Stunden im Schmelzabschnitt (101a) aufweist, und/oder
die Glasschmelze (120) eine Mindestverweilzeit von mindestens 2,0 Stunden oder mindestens 3,0 Stunden oder mindestens 4,0 Stunden im Konditionierungsabschnitt (101b) aufweist, und/oder
die Glasschmelze (120) eine Mindestverweilzeit von mindestens 4,0 Stunden oder mindestens 5,0 Stunden oder mindestens 6,0 Stunden im Schmelzofen (101) aufweist.

21. Verfahren nach einem der Ansprüche 14 bis 20, wobei

die Glasschmelze (120) eine durchschnittliche Verweilzeit von mindestens 20,0 Stunden oder mindestens 24,0 Stunden oder mindestens 28,0 Stunden im Schmelzabschnitt (101a) aufweist, und/oder
die Glasschmelze (120) eine durchschnittliche Verweilzeit von mindestens 10,0 Stunden oder mindestens 12,0 Stunden oder mindestens 14,0 Stunden im Konditionierungsabschnitt (101b) aufweist, und/oder
die Glasschmelze (120) eine durchschnittliche Verweilzeit von mindestens 30,0 Stunden oder mindestens 35,0 Stunden oder mindestens 39,0 Stunden oder mindestens 43,0 Stunden im Schmelzofen (101) aufweist.

## Revendications

1. Récipient de fusion (101) pour la fusion du verre comprenant

- deux ou plusieurs circuits de chauffage (110),
- éventuellement une entrée (111) pour un lot de verre et/ou une sortie (112) pour un verre fondu (120), et
- éventuellement une superstructure (109),
dans lequel le récipient de fusion (101) comprend une section de fusion (101a) et une section de conditionnement (101b), dans lequel la section de conditionnement (101b) se trouve sous la section de fusion (101a),
dans lequel la section de fusion (101a) a une première paroi de fond (102a) et une première paroi (103a) entourant un premier volume (104a), la première paroi de fond (102a) ayant une ouverture (105),
dans lequel la section de conditionnement (101b) a une deuxième paroi de fond (102b) et une deuxième paroi (103b) entourant un deuxième volume (104b),
dans lequel le premier volume (104a) est relié au deuxième volume (104b) par l'ouverture (105),
dans lequel un rapport de surface entre une surface de fond et l'ouverture (105) est compris entre 1,2 et 3,0, dans lequel la surface du fond est la somme des surfaces de la première paroi de fond (102a) et de l'ouverture (105),
dans lequel la section de fusion (101a) a une première hauteur (106a) d'au moins 0,8 m, ou d'au moins 1,1 m, ou d'au moins 1,4 m,
dans lequel la section de conditionnement (101b) a une deuxième hauteur (106b) d'au moins 1,0 m, ou d'au moins 1,3 m, ou d'au moins 1,6 m,
dans laquelle un rapport de la première hauteur (106a) à la deuxième hauteur (106b) est de 1,0 ou moins, ou de 0,95 ou moins, ou de 0,90 ou moins.

2. Récipient de fusion (101) selon la revendication 1, dans lequel un rapport de surface entre la surface du fond et la surface de l'ouverture (105) est compris entre 1,5 et 3,0, ou entre 1,75 et 2,75, ou entre 2,0 et 2,5.

3. Récipient de fusion (101) selon la revendication 1 ou la revendication 2,

dans lequel le premier volume (104a) est d'au moins 1,0 m$^3$, ou d'au moins 1,5 m$^3$, ou d'au moins 5,0 m$^3$, ou d'au moins 10,0 m$^3$,

dans lequel le deuxième volume (104b) est d'au moins 0,8 m$^3$, ou au moins 1,1 m$^3$, ou au moins 3,0 m$^3$, ou au moins 5,0 m$^3$, et/ou
dans lequel un rapport du premier volume (104a) au deuxième volume (104b) est de 1,30 ou plus, ou de 1,50 ou plus, ou de 1,70 ou plus.

4.  Récipient de fusion (101) selon l'une quelconque des revendications précédentes,
dans lequel la première paroi de fond (102a) est orientée horizontalement ou selon un angle oblique $\alpha$ de 120° ou moins, ou de 110° ou moins, ou de 100° ou moins, par rapport à la première paroi (103a).

5.  Récipient de fusion (101) selon la revendication 4, dans lequel la première paroi de fond (102a) a une largeur minimale d'au moins 0,10 m, dans lequel la largeur minimale de la première paroi de fond (102a) est définie comme la distance la plus courte entre l'ouverture (105) et la première paroi (103a).

6.  Récipient de fusion (101) selon l'une quelconque des revendications précédentes, dans lequel la première paroi de fond (102a) a un centre de masse de paroi de fond (108-1) et dans lequel l'ouverture (105) a un centre de masse d'ouverture (108-2), dans lequel le centre de masse de paroi de fond (108-1) et le centre de masse d'ouverture (108-2) sont tous deux sur un axe vertical fictif.

7.  Récipient de fusion (101) selon l'une quelconque des revendications précédentes, comprenant en outre

    - un contrôleur commun (107) pour commander les deux ou plusieurs circuits de chauffage (110),

    dans lequel les deux ou plusieurs circuits de chauffage (110) comprennent chacun un changeur de fréquence (113) connecté électriquement via un correcteur de facteur de puissance (114) et un transformateur (115) à au moins deux électrodes (116) immergeables dans le verre fondu (120).

8.  Récipient de fusion (101) selon la revendication 7, comprenant en outre

    - des conducteurs (117) reliant les changeurs de fréquence (113), les correcteurs de facteur de puissance (114), les transformateurs (115) et les électrodes (116),
    - des lignes de signal (118) reliant les changeurs de fréquence (113) au contrôleur commun (107).

9.  Récipient de fusion (101) selon la revendication 7 ou la revendication 8, dans lequel

    - l'une ou plusieurs des au moins deux électrodes (116) sont situées partiellement ou complètement dans ou sur la première paroi de fond (102a) et/ou l'une ou plusieurs des au moins deux électrodes (116) constituent une partie de la première paroi de fond (102a) ; ou
    - la section de fusion (101a) comprend au moins deux électrodes (116) qui sont situées partiellement dans ou sur la première paroi de fond (102a) et qui ont une orientation oblique dans une plage de 2 à 8°, de préférence de 4 à 6°, par rapport à une position essentiellement verticale et à un axe de rotation vertical des électrodes (116), et la section de conditionnement (101b) comprend au moins deux électrodes (116) qui sont situées partiellement dans ou sur la deuxième paroi de fond (102b) et qui ont une position essentiellement verticale par rapport à un axe de rotation vertical des électrodes (116) ; et/ou
    - le matériau d'électrode d'une ou de plusieurs ou de toutes les au moins deux électrodes est choisi parmi Pt, Rh, Ir, Pd, les alliages de ces métaux nobles, Ta, Mo, $MoSi_2$, $MoZrO_2$, W, $SnO_2$, et leurs combinaisons.

10. Récipient de fusion (101) selon l'une quelconque des revendications 7 à 9, dans lequel une ou plusieurs des au moins deux électrodes (116) ont la forme d'une tige ou d'une plaque.

11. Récipient de fusion (101) selon l'une quelconque des revendications 7 à 10, comprenant au moins six électrodes (116), formant éventuellement au moins trois circuits de chauffage (110), dans lequel éventuellement au moins deux électrodes (116) font partie de deux circuits de chauffage (110) indépendants.

12. Récipient de fusion (101) selon la revendication 11, dans lequel la première paroi de fond (102a), la deuxième paroi de fond (102b), la première paroi (103a) et/ou la deuxième paroi (103b) comprennent ou consistent en un matériau réfractaire, dans lequel le matériau réfractaire est éventuellement un matériau céramique.

13. Récipient de fusion (101) selon l'une quelconque des revendications précédentes, dans lequel la première paroi de fond (102a) a une forme circonférentielle extérieure de cercle, d'ovale ou de polygone ayant de 3 à 60 angles, et/ou dans lequel l'ouverture (105) a une forme de section transversale de cercle, d'ovale ou de polygone ayant de 3 à 60 angles.

14. Procédé de fabrication d'un verre fondu (120), comprenant les étapes

   - fondre un lot de matières premières pour former un verre fondu (120) dans une section de fusion (101a) d'un récipient de fusion (101), la section de fusion (101a) ayant une première hauteur (106a),
   - chauffer le lot et/ou le verre fondu (120) à l'aide de deux circuits de chauffage ou plus dans la section de fusion (101a) du récipient de fusion (101), dans lequel la section de fusion (101a) a une première paroi de fond (102a) et une première paroi (103a) entourant un premier volume (104a), la première paroi de fond (102a) ayant une ouverture (105),
   - traiter le verre fondu (120) dans une section de conditionnement (101b) du récipient de fusion (101), dans lequel la section de conditionnement (101b) est située sous la section de fusion (101a), la section de conditionnement (101b) ayant une deuxième hauteur (106b), dans lequel la section de conditionnement (101b) a une deuxième paroi de fond (102b) et une deuxième paroi (103b) entourant un deuxième volume (104b),
   - retirer le verre fondu (120) du récipient de fusion (101),
   dans lequel une température moyenne du verre fondu (120) dans la section de fusion (101a) est supérieure d'au moins 10 K, ou d'au moins 30 K, ou d'au moins 50 K, à une température moyenne du verre fondu (120) dans la section de conditionnement (101b),
   dans lequel la section de fusion (101a) a une première hauteur (106a) d'au moins 0,8 m, ou d'au moins 1,1 m, ou d'au moins 1,4 m,
   dans lequel la section de conditionnement (101b) a une deuxième hauteur (106b) d'au moins 1,0 m, ou d'au moins 1,3 m, ou d'au moins 1,6 m,
   dans lequel un rapport de la première hauteur (106a) à la deuxième hauteur (106b) est de 1,0 ou moins, ou de 0,95 ou moins, ou de 0,90 ou moins.

15. Procédé selon la revendication 14, dans lequel un flux convectif est établi dans la section de fusion (101a), éventuellement en régulant un flux de chaleur du lot et/ou du verre fondu (120) à l'aide des deux circuits de chauffage ou plus dans la section de fusion (101a) de le récipient de fusion (101).

16. Procédé selon la revendication 14 ou la revendication 15, dans lequel un flux uniforme est établi dans la section de conditionnement (101b), éventuellement en régulant un flux de chaleur du verre fondu (120) à l'aide les deux circuits de chauffage ou plus dans la section de fusion (101a) du récipient de fusion (101).

17. Procédé selon l'une quelconque des revendications 14 à 16, dans lequel il n'y a pratiquement pas de retour de verre fondu (120) dans la section de conditionnement (101b) vers le verre fondu dans la section de fusion (101a).

18. Procédé selon l'une quelconque des revendications 14 à 17, dans lequel la section de fusion (101a) présente une première paroi de fond (102a) et une première paroi (103a) entourant un premier volume (104a), la première paroi de fond (102a) présentant une ouverture (105), dans lequel la section de conditionnement (101b) présente une deuxième paroi de fond (102b) et une deuxième paroi (103b) entourant un deuxième volume (104b),

   dans lequel un rapport entre le débit de verre et une surface de fond est d'au moins 1.5 t/(d.m$^2$), ou au moins 1,7 t/(d.m$^2$), ou au moins 2,0 t/(d.m$^2$), dans lequel la surface du fond est la somme des surfaces de la première paroi de fond (102a) et de l'ouverture (105), et/ou
   dans lequel un rapport entre le débit de verre [m$^3$/d] et le deuxième volume (104b) est au moins 0,3 d$^{-1}$, ou au moins 0,5 d$^{-1}$.

19. Procédé selon l'une quelconque des revendications 14 à 18, dans lequel un rapport de surface entre la surface du fond et l'ouverture (105) est compris entre 1,2 et 3,0, ou entre 1,75 et 2,75, ou entre 2,0 et 2,5, dans lequel la surface du fond est la somme des surfaces de la première paroi de fond (102a) et de l'ouverture.

20. Procédé selon l'une des revendications 14 à 19, dans lequel

   - le verre fondu (120) a un temps de séjour minimum d'au moins 2,0 heures, ou d'au moins 3,0 heures, ou d'au moins 4,0 heures dans la section de fusion (101a), et/ou
   - le verre fondu (120) a un temps de séjour minimal d'au moins 2,0 heures, ou d'au moins 3,0 heures, ou d'au moins 4,0 heures dans la section de conditionnement (101b), et/ou
- le verre fondu (120) a un temps de séjour minimum d'au moins 4,0 heures, ou d'au moins 5,0 heures, ou d'au moins 6,0 heures dans le récipient de fusion (101).

21. Procédé selon l'une quelconque des revendications 14 à 20, dans lequel

- le verre fondu (120) a un temps de séjour moyen d'au moins 20,0 heures, ou d'au moins 24,0 heures, ou d'au moins 28,0 heures dans la section de fusion (101a), et/ou
- le verre fondu (120) a un temps de séjour moyen d'au moins 10,0 heures, ou d'au moins 12,0 heures, ou d'au moins 14,0 heures dans la section de conditionnement (101b), et/ou
- le verre fondu (120) a un temps de séjour moyen d'au moins 30,0 heures, ou d'au moins 35,0 heures, ou d'au moins 39,0 heures, ou d'au moins 43,0 heures dans le récipient de fusion (101).

**Figure 1**

**Figure 2a**

**Figure 2b**

105 102a

102b

108-1,108-2

**Figure 3a**

105

102b

108-1,108-2

102a

Figure 3b

**Figure 4**

**REFERENCES CITED IN THE DESCRIPTION**

**Patent documents cited in the description**

- CN 107686226 A

- CN 107522387 A